# EUROPEAN PATENT SPECIFICATION

(11) **EP 3 585 699 B1**
(45) Date of publication and mention of the grant of the patent: **01.04.2026**
(21) Application number: 18757991.7
(22) Date of filing: 21.02.2018
(51) Int. Cl.: B65D 75/58, B32B 27/08

(54) **PEELABLE EASY OPEN PLASTIC BAG AND METHOD OF MAKING A BAG**
PEELBARER, LEICHT ZU ÖFFNENDER KUNSTSTOFFBEUTEL UND VERFAHREN ZUR HERSTELLUNG EINES BEUTELS
SAC EN PLASTIQUE PELABLE FACILE À OUVRIR ET PROCÉDÉ DE FABRICATION S'UN SAC

(30) Priority: 23.02.2017 US 201715440970; 24.04.2017 US 201715495772; 13.06.2017 US 201715621850
(43) Date of publication of application: 01.01.2020
(73) Proprietor: Polytex Fibers LLC, Houston, TX 77041 (US)
(72) Inventor: BAZBAZ, Jacobo, Bellaire, TX 77401 (US); ZAROLI, Alberto, Katy, TX 77494 (US)
(74) Representative: Watermeyer, Nicholas
(86) International application number: PCT/US2018/019054
(87) International publication number: WO 2018/156657

(56) References cited:
- EP-A1- 1 433 711
- WO-A1-2011/078973
- WO-A2-00/02782
- WO-A2-91/18377
- US-A- 3 684 158
- US-A- 3 750 937
- US-A- 5 184 447
- US-A1- 2005 036 716
- US-A1- 2012 314 979
- US-A1- 2014 105 523
- US-A1- 2015 266 644
- US-B1- 6 478 465

## Description

### BACKGROUND OF THE INVENTION

Conventional plastic bags of a wide variety of sizes and shapes are used in various situations. Bulk materials, such as flour, sugar, rice, seed, animal feed, chemicals, powdered materials or the like, for example, typically have been packaged in woven plastic bags in the past. Pet food, bird seed and other products sold in retail stores typically have not been packaged in conventional woven plastic bags. Among other reasons for this, woven plastic bags were considered too rudimentary to be printed with high end graphics suitable for consumer type of packaging. In addition, the high speed requirements in the filling and packaging operations limited the use of the woven bags in these applications. Conventional bag processing equipment could not cut and shape woven bags at the speeds required for high volume production.

Laminated woven sacks (LWS) were developed using a woven polypropylene structure laminated to a bi-oriented polypropylene film (BOPP) that can be reverse printed with high end graphics suitable for consumer type of packaging. The LWS provides a stronger, more attractive bag than the more conventional multiwall bags used for that purpose over the last 20 years. Due to their tough strong structure, conventional LWS bags are typically sewn shut on both ends. These LWS recently met with success and have been successfully substituted for the conventional multiwall paper bags used in the pet food industry for many years.

One major drawback of the sewn LWS has been the closing of the bags at high speed filling lines, such as those for filling such bags with pet food. Experience has shown that sewing production lines are typically slower than the filling of the multiwall pinch bottom bags. Additionally, the sewn bags do not provide an aesthetically pleasing and useful clean display on the ends of the bags, thus making it difficult for consumers to identify or find a desired brand quickly when the bags are displayed on the shelves at the point of sale, such as when they are stacked on top of one another. In addition, the sewn ends required puncturing the plastic bags and thus result in a bag that is not sealed, leading to somewhat reduced shelf-life and possible infestation of the contents of the bag. Thus, there is a need for pinch laminated woven sacks that overcome these drawbacks in the filling and closing operations while allowing an attractive graphic display of the bags' ends at the retail outlet and also providing a strong, durable bag which remains sealed.

A further disadvantage of the newly developed pinch bottom laminated woven sack, however, is that it does not include an easy open feature that allows the consumer or purchaser to quickly and easily open the bag without the use of scissors or knives. There is a need for such a pinch bottom laminated woven sack which is easy to open without the use of scissors, knives or other such instruments, and also does not require the use of excessive force.

Woven plastic bags have been used and are conventional for certain applications. An example of a conventional woven plastic bag is provided in U.S. Patent No. 4,373,979 ("the '979 patent"), issued on February 15, 1983. The '979 patent describes the use of woven strips of highly longitudinally-oriented, high-density polyethylene or polypropylene in a bag construction in which the bag is formed from a seamed tube made of the woven plastic material. The seamed tube has gussets on either side and, when a portion is cut from the rest of the tube, a bag having 2 open, unsealed ends is provided. The '979 patent describes the use of ultrasonic spot welds to seal portions of a bag made of such woven plastic strips, as opposed to sewing the seams of a bag or using a hot melt adhesive to seal the gusset forming pleat. The '979 patent purports to be an improvement for sealing a plastic bag. As noted in the '979 patent, sewing one end tends to take longer, thus adding time to the manufacturing process. In addition, the sewn ends in a conventional bag tend to be a weak portion of the bag, and a likely location for rips, tearing, and subsequent loss of contents during storing, shipping and handling. In addition, such bags may not provide sufficient protection from infestation from vermin and/or insects.

Another example of plastic bags is disclosed in U.S. Patent Application Publication Number US 2010/0029455 A1 ("the '455 publication"), published on February 4, 2010, which describes production of web sections from a flexible web material that is provided with tear-off lines produced by laser beam processing at the distance of the length of the web sections to be formed. The tear-off lines weaken the flexible web material, but do not result in complete separation of the web sections from the web material, which occurs upon tearing the flexible web material.

More recently, some types of plastic bags have provided improvements in sealing the ends of the bags. For example, in U.S. Patent No. 6,800,051 B2 ("the '051 patent"), issued on October 5, 2004, a process for sealing side fold sacks made of plastic film is described. According to the '051 patent, a web of plastic tubular film is cut to provide a staggered detachment along a perforation so that one wall (*e.g.,* the front wall) projects beyond the opposing wall (*e.g.,* the back wall). The projecting portion of the first wall is then folded over and sealed to the opposing wall by means of a plastic adhesive such as a polyurethane adhesive or hot melt. However, such bags involve plastic films, not woven plastic materials, and therefore are unable to handle the weight loads of conventional bulk bags made of paper and other materials. Such bags are useful for only certain lightweight contents, such as bread.

There are a variety of conventional ways of providing for reusable openings in bags. For example, U.S. Patent No. 6,478,465 B1 ("the '465 patent"), issued November 12, 2002, describes a peelable opening in a multi wall, pinched bottom open mouth bag construction. The '465 patent also describes the use of an adhesive layer that can be used so that the bag opening is reclosable.

In other types of conventional plastic bags, such as those used in retail and grocery stores, the use of a weakened portion provided by one or more perforations in the plastic bag wall is known. A number of approaches have been taken in connection with such bags, including those shown in U.S. Patent No. 5,188.235 (the '235 patent), issued February 23, 1993, as well as in U.S. Published Patent Application No. 2005/0087542 A1 (the '542 application), published April 28, 2005, U.S. Patent No. 5, 979,655 (the '655 patent), issued November 9, 1999, and U.S. Published Patent Application No. 2006/0072856 (the '856 application), published April 6, 2006. However, none of these bags are woven bags, let alone bags with multiple layers.

Newly developed pinch laminated woven sacks overcome these drawbacks in the filling and closing operations while allowing an attractive graphic display of the bags' ends at the retail outlet and also providing a strong, durable bag which remains sealed. However, such bags still remain susceptible to leakage, breakage and infestation at both ends of the seam and in the area along the top and bottom of the gussets. There is a need for such a pinch bottom laminated woven sack that includes one or more feature(s) that prevent leakage, breakage and/or infestation at both ends of the seam and in the area along the top and bottom of the gussets. Moreover, the bag needs to be strong enough to avoid leakage, breakage or infestation, which can begin with a small opening or crack that then gets larger over time, such as with additional forces or movement of the bag. At the same time, however, it is desirable to avoid "solutions" that require additional plastic material, additional adhesive material, such as for extra strength, or that slow the speed of manufacture. Such "solutions" increase the cost of the bag.

US 2005/036716 discloses a security bag which has tamper indicating features that may be incorporated directly on the bag during manufacture.

Typically woven and non-woven bags are sealed with a single or double fold at each end with tape over the single or double fold, stitching at both ends, or a zipper at one end and a single or double fold at the other end. However, opening woven and certain non-woven bags has proven difficult, due to the strength of the bag. Therefore, what is needed are woven and non-woven bags that are easier to open, that do not add much to the cost or time to manufacture, and are not susceptible to inadvertent tearing, punctures, breaking, or the like.

### SUMMARY OF THE INVENTION

The present invention is as defined in the claims.

The present disclosure provides woven plastic bags comprising one or more features that prevent leakage and/or infestation at both ends of the bag when closed, and also optionally in the area of a seam and in the area along the top and bottom of the gussets, when present.

The invention provides a bag comprising:
a front wall, a back wall, a first side wall, and a second side wall wherein the first and second side walls are disposed on opposite sides of the front and back walls and connecting the front wall to the back wall, forming a bag with a first end and a second end;
wherein each of the front wall, back wall, first side wall and second side wall comprise at least two laminated layers comprising (i) a first layer comprising woven oriented polypropylene or polyethylene strips, and (ii) a second layer comprising an oriented polypropylene or polyethylene film; wherein a portion of the front wall is folded or rolled over the first end of the bag and sealed to a portion of an exterior surface of the back wall, or a portion of the back wall is folded or rolled over an end of the bag and sealed to a portion of an exterior surface of the front wall, to form a sealed closure of the bag, wherein the sealed closure comprises a peel strength, wherein at least a portion of a surface of the front wall or the back wall is adapted to be separable from the sealed closure with a lower peel strength than the remaining portion of said sealed closure, wherein the difference in peel strength is due to a difference in treatment of one or more surfaces of the bag, and wherein the difference in treatment comprises a difference in ionization of a portion of the one or more surfaces, wherein the portion of the one or more surfaces comprises a treatment of one or more of a polyurethane ink, a polyamide ink, a nitrocellulose ink, or a mixture of any thereof.

The invention also provides a method of making a bag, comprising the steps of:
providing a bag having a first bag wall, a second bag wall, a first side wall and a second side wall, with the first and second bag walls opposing each other, and wherein each bag wall comprises at least a first polymeric layer and a second layer, with the bag defining a first end and a second end, wherein the first bag wall extends beyond the second bag wall and each of the bag walls have an interior surface and an exterior surface;
adding an ink treatment to a portion of an interior surface of the first bag wall proximal the first end of the bag, an exterior surface of the second bag wall proximal the first end of the bag, or both;
adding an ionization treatment to the portion of the interior surface of the first bag wall proximal the first end of the bag comprising the ink treatment, the exterior surface of the second bag wall proximal the first end of the bag comprising the ink treatment, or both;
folding the portion of the first bag wall extending beyond the end of the second bag wall over the end of the second bag wall and contacting a portion of the interior surface of the first bag wall proximal the end of the first bag wall with a portion of the exterior surface of the second bag wall proximal the end of the second bag wall, thereby creating an overlay portion of the first and second bag walls;
applying heat and/or pressure to a first portion of the overlay portion of the first and second bag walls to form a seal between the first portion of the overlay portion of the first and second bag walls.

It is an aspect of the disclosure that the disclosed bags also can include, in certain embodiments, an easy open feature including an elongated weakened area spanning a portion of the front wall or the back wall, or a combination thereof and/or a side wall, and optionally a protective sealed covering that can be a folded portion of one or more bag walls or a length of a sealing tape with a layer of adhesive on the bottom surface such that the protective covering or sealing tape adheres to the exterior bag surface and completely covers and seals the weakened area. Such a sealing tape is generally available on a roll or sheet from which it can be peeled and adhered to a desired surface. The tape is thus a long and relatively thinner product with a first end and a second end disposed oppositely of the first end and a first edge and a second edge disposed oppositely of the first edge. The sealing tape further comprises a bottom surface comprising an adhesive and adapted to adhere to a surface and a top surface opposite of the bottom surface. In certain embodiments the sealing tape additionally can include a center section extending generally in parallel to the first and second edges of the sealing tape over substantially the entire length of the sealing tape from the first end to the second end, and adapted such that when the sealing tape is adhered to a surface such as the surface of a bag, at least a portion of the center section can be removed from the surface while the two sections on either side of the center section of the sealing tape remain adhered to the surface.

In a first embodiment the center section can be defined by polymer strings or waxed fiber strings attached to the bottom surface of the tape and extending at least of portion of the length of the tape or in certain embodiments, substantially the entire length of the tape. The strings are adapted such that when the center section, which is disposed between the strings is pulled up toward the top surface of the tape, the strings cut through the tape such that the center section is removed and the sections on either side of the center section remain adhered to a surface.

In a second embodiment an additional and separate strip of tape, termed the "center strip" herein can provide the center section of the sealing tape and can comprise a first end and a second end that are substantially continuous with the first and second ends of the sealing tape and a first edge and a second edge that overlap with the inner edges of the sections of the sealing tape on either side of the center section. In certain embodiments the center strip can be adhered to the bottom surface or to the top surface of the inner edges of the sealing tape sections on either side of the center strip, or a combination thereof such that the center strip of tape forms the center section of the sealing tape and can be removed from a surface without removing the entire sealing tape. In certain embodiments, the long edges of the center strip of tape can overlap with the top or bottom surface of the sections of the sealing tape on either side of the center strip of tape, or in certain embodiments the sealing tape is composed of 3 portions, with a first strip of sealing tape on a first side of the center strip, a second strip of the sealing tape on a second side of the center strip and a center strip disposed between the first and second strips of the sealing tape. In this latter configuration the inside edges of the first and second strips abut and optionally overlap the outer edges of the center strip such that the three portions seal as a single tape when adhered to a surface such as the surface of a bag.

In certain embodiments the protective covering is a folded or rolled portion of one or more bag walls that are sealed to a portion of the exterior bag wall or face of the bag and preventing leakage or infestation of the bag during filling, transport and storage of the bag, but that is easily removable by a typical user or consumer without tools such as a knife or scissors. In a preferred embodiment, a bag comprises an easy open feature comprising an area with controlled seal strength near a first end of a bag such as a top end or a bottom end. During manufacture the first end can be sealed with an adhesive or other means so that the seal is strong enough to prevent leakage or infestation. A portion of the first end can be then rolled or folded over the easy open feature and sealed to the face of the bag. The folded or rolled portion is sealed to the face effective to seal and protect the easy open feature and is sealed to the face with an adhesive that is releasable with significantly less force when pulled in a particular direction, such as diagonally, relative to pulling up, in the direction of pressure from the heavy contents of such a bag. Pulling the easy open covering in a diagonal direction, for example, in which the peel strength is significantly less than that of the sealed end, allows the protective cover to be removed by hand by a typical user or consumer without the need for tools such as a knife or scissors.

One or both ends of the bag has a folded or rolled over portion or section of a first bag wall that include one or more surfaces that are less tightly sealed to the second bag wall. The less tightly sealed surface will still be strong enough to pass the rigors required of the bag, including drop tests after heating or freezing conditions. The end of the bag with the controlled sealing strength is an outer surface of a bag wall that adheres to another outer surface of a different bag wall. The difference in adherence is due to a difference in ionization of a portion of the one or more surfaces. The sealing strength of the bag ends can be controlled by treating the portion of the one or more surfaces of the bag wall with a polyamide ink, a nitrocellulose ink, a polyurethane ink, or any combination of the foregoing. Some or all of the portions of the bag wall(s) that are treated with one or more of the foregoing inks may further be treated with a surface treatment, a varnish, or a polymeric material. Once the selected portions of the bag wall(s) proximal the end or ends of the bag have been so treated, the bag walls are sealed together using hot air and/or other sealing means as described herein.

The bag comprises a front wall and a back wall, each composed of two or three layers as described herein and each comprising an outermost layer, or face, in which a portion of the rear wall adjacent and including an unsealed end is folded or rolled over and is sealed to the exterior face of the front wall, for example, or a portion the front wall can be folded or rolled over and adhered to the exterior surface of the rear bag wall. In certain embodiments the faces of the bag are printed prior to sealing of the front wall to the rear face or the rear wall to the front face. The application of an ink is used to preferentially control the sealing strength of the seal provided by the hot air or other sealing means applied to that portion of the end of the bag. As noted, the ink used for controlling sealing strength includes one or more of a polyurethane, a polyamide, or a nitrocellulose ink. A portion of one or more faces of the bag is subjected to a greater or lesser amount of ionization such as corona discharge ionization.

The sealing of the bag walls for a folded or rolled portion of a bag wall that seals the bag exhibits a peel resistance in a particular direction that may require a force of no more than approximately 4.5, 4.0, 3.6, 3.2, 2.7, 2.3, 1.8, or 1.4 kg (10, 9, 8, 7, 6, 5, 4, or 3 pounds) to undo the seal and remove the cover or separate the bag wall or walls, for example, resulting in a bag that is significantly easier for a consumer to open by hand and yet still retains all of the strength needed to maintain the sealing integrity of the bag through filling, shipment, storage, display and the like, even in conditions of heat and cold.

It is an aspect of the disclosure that a bag is sealed so that the seal and the filled bag will pass the drop tests as described herein or as described as ASTM D5276-98 (ASTM D5276-98 (2009), Standard Test Method for Drop Test of Loaded Containers by Free Fall, ASTM International, West Conshohocken, PA, 2009) and can still be opened by hand with a force of no more than 4.5 kg (10 pounds).

It is a further aspect of the present disclosure that the sealing strength may further be controlled with the use of one or more cuts or perforations in combination with the use of one or more inks and one or more ionization treatments as described herein, such as by using one or more cuts or perforations to control the separation of two bag walls once a consumer begins to peel them apart so that the opening of the bag will provide an opening at one corner to allow a consumer to easily pour out the contents.

It is an aspect of the disclosure that the disclosed bags can have an easy open feature and that an easy open feature can comprise a weakened area including cuts or perforations in a pattern that provides access to any contents of the bag when the bag surface is torn or opened along the weakened area. In certain embodiments, therefore, when a sealing tape as disclosed herein is adhered to a surface of a bag, the center section of the sealing tape is disposed such that the center section covers at least a portion of the weakened area, and in certain embodiments the center section covers at least a portion of the weakened area and the remainder of the sealing tape does not cover any portion of the weakened area. In yet other embodiments, the center portion covers the entire weakened area.

In certain embodiments a sealing tape is placed on the surface of a bag so that a linear weakened area is substantially centered in the width of the sealing tape and the center section of the sealing tape can extend to be on both sides of the weakened area, so that pulling up on one end of the center section of the sealing tape is effective to remove the center section and expose at least a portion of the weakened area without removing the entire width of the sealing tape, or while leaving the sections of the sealing tape on either side of the center section still adhered to the surface. This configuration of sealing tape with a separately removable center section, either comprising edging strings, or a center strip of tape allows a user to open the bag by pulling up only a portion of the sealing tape, which requires substantially less force, or hand strength than would be required to pull up the entire width of the sealing tape.

In certain embodiments the disclosed bags can be configured with a step cut pattern on one or both ends of the bag. A step cut bag is known in the art to provide a better seal when the step cut end is folded over and affixed to the surface of a bag with an adhesive or other means such as heat, for example. In the step cut end, where the end of the front and back walls of the bag intersect, meet or make a junction with the side walls, the line of the upper or lower edge of the stepped portion of the bag steps up or down. When the side walls are configured as gussets, a fold line typically runs perpendicular to the top and bottom end of the front and back walls and is positioned in the center line of the side walls. In such embodiments, the side walls can include another step down or up to the gusset fold line. In the production of the disclosed bags, a bag blank, or flat sheet is provided and formed into a tube by folding the blank so that the two side edges overlap on the front or back wall of the bag and are bonded to form a seam. Prior to forming the tube, a continuous sheet of material is cut to separate the individual bags from the continuous sheet by a single cut that forms the bottom end of one bag and the top end of the subsequent bag, (or the reverse) simultaneously so that one end steps up and the other end steps down.

In conventional step cut bags, and particularly in bags with at least one woven polymer layer, the steps are often cut as right angles. It is a discovery presented in the present disclosure, however, that by forming the cuts as curves, or as obtuse or acute angles with respect to the horizontal line of the bag front or back wall, significant reductions in leakage or infestation are obtained. In such a bag leakage can be reduced by as much as 66% or more for storage of 11-18 kg (25-40 pound) or larger bags of dry pet food in some examples. The disclosure can be further defined, therefore, in some embodiments as a step cut bag in which the junctions at the top and/or bottom end of the back wall and the first side wall and the second side wall, and the junctions of the front wall with the first side wall and the second side wall, are curved or angled cuts other than a 90° or square angle, or a combination of curved and angled cuts. It is a further embodiment that in those bags in which a gusset with a central fold line extends from the bottom end to the top end of the respective side walls and dividing the first side wall into a front first side wall and a back first side wall and dividing the second side wall into a second front side wall and a second back side wall, the end cut of the bag will include a step cut, as a curve or acute angle, or a combination of curves and acute angles between the side wall ends and the gusset fold lines. In certain embodiments the junctions of the back wall and the front wall with the first and second side walls, and at the gusset fold lines at least in part, are cut at angles between about 15° and about 75°, or angles between about 30° and about 60° or angles of about 45° with respect to the top end of the front wall, or are cut at least in part in radial, elliptical, parabolic, or hyperbolic curves, or combinations of curves and angles other than right angles. In "combination" in this context can mean that some junctions are curves and others are angled, or that some single steps can incorporate both a curve and an angle.

It is an aspect of the disclosure that the woven polymer bag can have an easy open feature. As discussed elsewhere, as heavy duty woven bags are used for retail or consumer products, there is a need to provide an easy way to open such bags without the use of tools. It is a further aspect of the disclosure that the easy open feature is covered and sealed with a tape that is tightly or strongly adhered to a surface of the bag to prevent leakage or infestation into the product within the bag. The adhesion must be much stronger than in smaller bags that are not subject to the stresses of a bag holding 4.5-68.0 kg (10-150 pounds) of product, for example. The seal of the easy open feature must also be stronger than in a single layer bag, or a smaller bag because of the difficulty of making an easy open feature in a woven polymer material that provides a sufficient seal.

The easy open feature can be configured in various ways and can include a weakened area, a zipper, a bar and groove, or other methods or configurations known in the art. In certain embodiments the easy open feature is a series or line of perforations or a line of cuts, or a combination thereof, through some or all of the bag layers on the front or back wall of a bag, or a weakened area that extends from the front wall, across a side wall and across the back wall. The weakened area can also include a curved or arcuate feature somewhere along the line of the weakened area, with such a feature to serve as a thumb tab for use in opening the bag. In certain embodiments a thumb tab feature can be near either end of the weakened area or nearer to the center, or at the center of the weakened area. In certain embodiments, therefore, the easy open feature is a weakened area formed by a line of perforations or cuts spaced apart from the bottom or top edge of the bag when the bag ends are sealed, at a distance of from about 10% to about 30%, or from 5% to 40% of the distance from the top edge to the bottom edge of the bag, or at a distance of from about 10% to about 30%, or from about 5% to about 40% of the distance from the bottom edge to the top edge of the front or rear wall of a bag, and extending horizontally over about 60% to about 99%, or from about 1% to about 99% of the width of the front wall, the back wall of a bag or both the front wall and back wall. It is understood in this disclosure that the width of the weakened area is generally not a critical measurement and that the width can vary considerably depending on the intended contents, or intended use of the bag and so any length of line or perforations can fall within the spirit of the present disclosure so long as the weakened area can be efficiently sealed with a tape as disclosed herein and provide a sufficient opening to conveniently remove the contents of the bag, when opened.

It is a further aspect of the disclosure that the sealing tape both provides an effective seal for the bag and also can be removed at least in part by a typical consumer, without the use of tools such as a knife or scissors. In certain embodiments the sealing tape includes a center section as discussed above adapted such that when one pulls up on the center section of the sealing tape, the sealing tape separates into a section that is removed and two sections, one on either side of the center section, that remain adhered to the bag surface. In certain embodiments the center section is about 5%, 10%, 12.5%, 15%, 25% or about 40%, or about 5% to about 50% of the total width of the sealing tape. Again the exact width of the center section can vary depending on the intended use of the bag. The center section is of a sufficient width to cover at least a portion of the width of the easy open feature and is narrow enough that the force required to pull up the center section of the sealing tape is significantly less than the force required to remove the entire width of the sealing tape. In certain embodiments, the sealing tape can have a width of from about 3 cm to about 13 cm (about 1 to about 5 inches), or from about 3.8 cm to about 8 cm (about 1.5 to about 3 inches) for example. Again, the width of the sealing tape is not an exact requirement but can vary depending on the intended use of a bag and the weight of contents of the bag during use. In certain embodiments, one end, or both ends of the sealing tape forms a tab region, such as to provide a pull tab. The tab can be formed by folding over an end of the sealing tape and creating an area of double thickness with the two adhesive faces of the bottom of the tab region adhering to each other. In this way, no adhesive is in contact with the bag in the tab region. The tab can be further formed by cutting a portion of the sealing tape between and along the edges of the center section and folding the cut portion on itself to create a tab that does not adhere to the surface of a bag in the tab region. This facilitates opening the sealing tape (and thus the bag) because the cuts have already been started without compromising the seal of the bag. It will be understood that other types of tabs, including adding a pull feature to the end of the sealing tape to create a tab can also be employed. In alternative embodiments the tab portion of the sealing tape can be manufactured without adhesive on the bottom surface. As used herein, the bottom surface of the tape is intended to convey its normal meaning in the art, which would be the exterior surface of the tape that adheres to another surface, such as the surface of the bag, and the top would be the exposed side of the tape that does not adhere.

The disclosed bags are described herein as heavy duty bags or bags designed to hold about 4.5 kg (10 pounds) or more, or about 4.5-68.0 kg (10-150 pounds) or about 9.1-45.3 kg (20-100 pounds) of dry product, and can also be described as bags that can withstand the standard drop test requirements in accordance with ASTM D5276-98 (ASTM D5276-98 (2009), Standard Test Method for Drop Test of Loaded Containers by Free Fall, ASTM International, West Conshohocken, PA, 2009), within an acceptable failure rate, for example, less than 5% or less than 3% or less than 1% failure rate when subjected to a drop test including hanging a filled bag at 62.8 °C (145°F) for 72 hours followed by a six point drop test from a height of at least four feet, followed by storage at -32 °C (-27°F) for 24 hours followed by another six point drop test from a height of at least four feet and repeating this test sequentially for five drop test cycles. The described bags can also be defined in certain embodiments as having an acceptable failure rate as defined above when subjected to a drop test in accordance with the ASTM D5276-98 drop test standard, including hanging a filled bag at 62.8 °C (145°F) for 144 hours followed by a ten point drop test from a height of at least four feet followed by storage at -32 °C (-27°F) for 72 hours followed by another ten point drop test from at height of at least four feet, and repeating the cycle five times. It is further understood that the sealing tape covering the easy open feature, or the folded or rolled portion of bag that seals the openable end, also has to endure these tests and fall within the acceptable failure rate. It is further understood that a six point drop test includes dropping the bag onto the front, back, top, bottom, and the two sides, while a ten point drop test includes the six point test and additionally dropping the bag on the four corners of the bag. It is understood herein that the openable end of the bag refers to the end which includes or is nearest to an easy open feature or a seal that requires less force to open than the opposite sealed end of the bag.

It is also an aspect of the disclosure that the sealing tape exhibits a peel resistance that is measurable according to a 180 Degree Peel Test per the ASTM D3330/3330M-04(2010) Test Method for Peel Adhesion of Pressure Sensitive Tape, standard and that the center section of the sealing tape has a peel resistance of no more than 50%, or no more than 40% or no more than 30%, or no more than 20% of the peel resistance of the entire sealing tape, or in other words, the force required to open the bag with the center section no more than 50%, or 60%, or 70%, or 80% of the force required to open the entire sealing tape. Functionally, therefore, the sealing tape as described herein provides the peel resistance of the full width of the sealing tape during transport and storage to prevent leakage and then provides a significantly reduced peel resistance when the bag is opened by peeling off a smaller portion of the sealing tape. The present inventors have demonstrated, for example, that with a sealing tape of 8 cm (3 inches) in width and a center section with a width of 1 cm (3/8"), an average force of from 4-5 kg (8-10 pounds) at a 180° angle was required to peel the entire tape from the bag, while an average force of only about 1.4-1.8 kg (3 to 4 pounds) was required to peel the center section of the tape. Thus a reduction in the force required to open a woven bag was reduced by more than 50%, and in certain cases up to 70%, making the bags significantly easier for a consumer to open by hand and without losing any sealing integrity of the bag.

In certain embodiments of the bags disclosed herein the front wall or the back wall of a bag comprises a seam extending from the top edge to the bottom edge of the front or back wall, wherein a portion of the front or back wall adjoining the seam comprises a tab adjacent to or extending vertically into the seam and a corresponding cut-out in the opposite end of the wall adjacent to or extending into the seam. The tab and cutout can be vertical with respect to the top and bottom ends of the bag and small relative to the size of the front or back wall of the bag, and can in certain embodiments be from about 1 cm (3/8 inch) to about 2 cm (5/8 inch) in width with a depth of about 0.3 cm (1/8 inch) to about 1.3 cm (1/2 inch) and can be disposed at the edge of the end of a portion of the bag that overlaps two edges of layered material to create the seam.

In certain embodiments the top end of the back wall projects further than the top end of a portion of the first side wall proximal to the back wall and the top end of a portion of the second side wall proximal to the back wall, the top end of a portion of the first side wall proximal to the back wall and the top end of a portion of the second side wall proximal to the back wall projects further than the top end of a portion of the first side wall proximal to the front wall and the top end of a portion of the second side wall proximal to the front wall, and the top end of a portion of the first side wall proximal to the front wall and the top end of a portion of the second side wall proximal to the front wall projects further than the top end of the front wall. In other embodiments at least a portion of the bottom end of the front wall projects further than the bottom end of a portion of the first side wall proximal to the front wall and the bottom end of a portion of the second side wall proximal to the front wall, the bottom end of a portion of the first side wall proximal to the front wall and the bottom end of a portion of the second side wall proximal to the front wall project further than the bottom end of a portion of the first side wall proximal to the back wall and the bottom end of a portion of the second side wall proximal to the back wall, and the bottom end of a portion of the first side wall proximal to the back wall and the bottom end of a portion of the second side wall proximal to the back wall project further than the bottom end of the rear wall. In further embodiments the top end of a portion of the first side wall proximal to the back wall and the top end of a portion of the first side wall proximal to the front wall are separated by an angled cut, and the bottom end of a portion of the first side wall proximal to the back wall and the bottom end of a portion of the first side wall proximal to the front wall are separated by an angled cut.

In additional embodiments the portion of the bottom end of the front wall that projects further than the bottom end of the first side wall and the bottom end of the second side wall, and the portion of the bottom end of the first side wall and the bottom end of the second side wall that project further than the bottom end of the rear wall are sealed to the outer surface of the bottom end of the rear wall. In certain embodiments the bottom end of the bag is sealed using an adhesive sealing, heat sealing, adhesive lamination, extrusion lamination, stitching, ultrasonic energy, pressure, tape, or any combination thereof. In some embodiments the bottom end of the bag is sealed using adhesive-to-adhesive sealing or adhesive-to-bag sealing. In further embodiments the bottom end of the front wall, the bottom end of the first side wall, the bottom end of the rear wall and the bottom end of the second side wall each project the same distance. In still further embodiments at least a portion of a single fold of the bottom end of the bag is sealed to the outer surface of the front wall or the outer surface of the rear wall of the bag. In yet further embodiments at least a portion of a double fold of the bottom end of the bag is sealed to the outer surface of the front wall or the outer surface of the rear wall of the bag.

In other embodiments the top end of the front wall, the top end of the first side wall, the top end of the rear wall and the top end of the second side wall each project the same distance. In certain embodiments at least a portion of the bottom end of the front wall projects further than the bottom end of a portion of the first side wall proximal to the front wall and the bottom end of a portion of the second side wall proximal to the front wall, the bottom end of a portion of the first side wall proximal to the front wall and the bottom end of a portion of the second side wall proximal to the front wall project further than the bottom end of a portion of the first side wall proximal to the back wall and the bottom end of a portion of the second side wall proximal to the back wall, and the bottom end of a portion of the first side wall proximal to the back wall and the bottom end of a portion of the second side wall proximal to the back wall project further than the bottom end of the rear wall. In still other embodiments the portion of the bottom end of the front wall that projects further than the bottom end of the first side wall and the bottom end of the second side wall, and the portion of the bottom end of the first side wall and the bottom end of the second side wall that project further than the bottom end of the rear wall are sealed to the outer surface of the bottom end of the rear wall. In additional embodiments the bottom end of the front wall, the bottom end of the first side wall, the bottom end of the rear wall and the bottom end of the second side wall each project the same distance. In certain embodiments the top end and the bottom end of the bag are sealed, and wherein the bag comprises at least 4.5 kg (ten pounds) by weight of a filling material.

In some embodiments the bag further comprises a third layer comprising a polymer between the first layer and the second layer. In certain embodiments the third layer comprises a woven polymer. In other embodiments the third layer comprises a film. In addition, the third layer may comprise polypropylene, high density polyethylene, low density polyethylene, polyester, or any combination thereof. In further embodiments the third layer comprises a polymeric film. In additional embodiments the third layer comprises polypropylene, polyethylene, polyethylene terephthalate, polyamide, or any combination thereof. In still other embodiments each of the first layer, the second layer and the third layer of the bag comprise a weakened portion.

In further embodiments the bag comprises printing on the front wall, the first side wall, the back wall, the second side wall, the first end, the second end, or any combination thereof. In still further embodiments at least portions of the surfaces of each of the front wall and the back wall comprise a plurality of discrete areas further comprising printing thereon. In yet further embodiments a portion of the front wall and a portion of the back wall combine to form a discrete portion of the bag located at or near either the top end or the bottom end, wherein the discrete portion of the bag comprises printing. The printing may be on the exterior surface of the bag or may be on the inside surface of an otherwise transparent film layer, which can have reverse printing thereon.

These and other objects of the invention will be apparent to those skilled in the art from the following detailed description. As used herein numbers and ranges are understood to be approximations and exemplary numbers only and when described in relation to one embodiment of a bag or component of a bag are meant to be equally applied to all embodiments disclosed herein unless such application contradicts the description or unless such individual application is expressly designated as applying only to a particular disclosed bag or feature.

### BRIEF DESCRIPTION OF THE DRAWINGS

The following drawings are included to further demonstrate certain aspects and embodiments of the present invention. The invention may be better understood by reference to one or more of these drawings in combination with the detailed description of specific embodiments presented herein.
FIG. 1 shows an outline of a step cut bag with a weakened area near the top end of the bag comprising a line of perforations extending from the front panel of the bag across the first side panel of the bag to the back panel of the bag according to one embodiment of the present disclosure.
FIG. 2 shows the top portion of the bag of FIG. 1 after closing the top end of the bag.
FIG. 3 shows the first step in opening the closed bag from FIG. 2.
FIG. 4 shows the second step in opening the closed bag from FIG. 2.
FIG. 5 shows the third step in opening the closed bag from FIG. 2.
FIG. 6 shows the fourth step in opening the closed bag from FIG. 2.
FIG. 7 shows the top portion of the bag of FIG. 1 after closing the top end of the bag and a location for optional application of adhesive to keep the top portion of the gusseted portion of the first side panel closed.
FIG. 8 shows an outline of a step cut bag with a weakened area near the top end of the bag comprising a line of perforations extending from the front panel of the bag across the first side panel of the bag to the back panel of the bag, and angled corners at the top and bottom of the portions of the first and second side panels on either side of the gusset fold, according to one embodiment of the present disclosure.
FIG. 9 shows an outline of a bag with a step cut top end and a flush cut bottom end, and a weakened area near the top end of the bag comprising a line of perforations extending from the front panel of the bag across the first side panel of the bag to the back panel of the bag according to one embodiment of the present disclosure.
FIG. 10 shows an outline of a bag with a flush cut top end and a flush cut bottom end, and a weakened area near the top end of the bag comprising a line of perforations extending from the front panel of the bag across the first side panel of the bag to the back panel of the bag according to one embodiment of the present disclosure.
FIG. 11 shows an outline of a bag with a step cut top end and a step cut bottom end, with an angled portion between the 2 sections of the side wall at both ends of the bag, and a tab at one end of the bag and a cut-out feature at the other end of the bag that extend into the seam.
FIG. 12 shows an outline of the top portion of a bag with a step cut top end, with radial (circular) portions between the back panel of the bag and the side wall, between the 2 sections of the side wall, and between the side wall and the front panel of the bag at the top end of the bag, and a cut-out feature at the top end of the bag that extends into the seam.

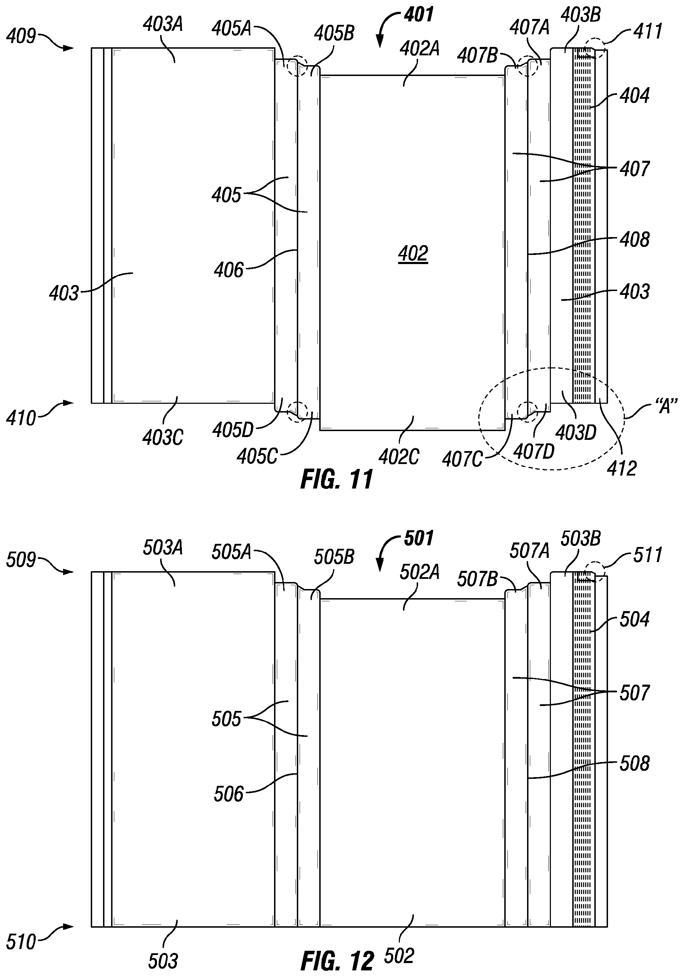

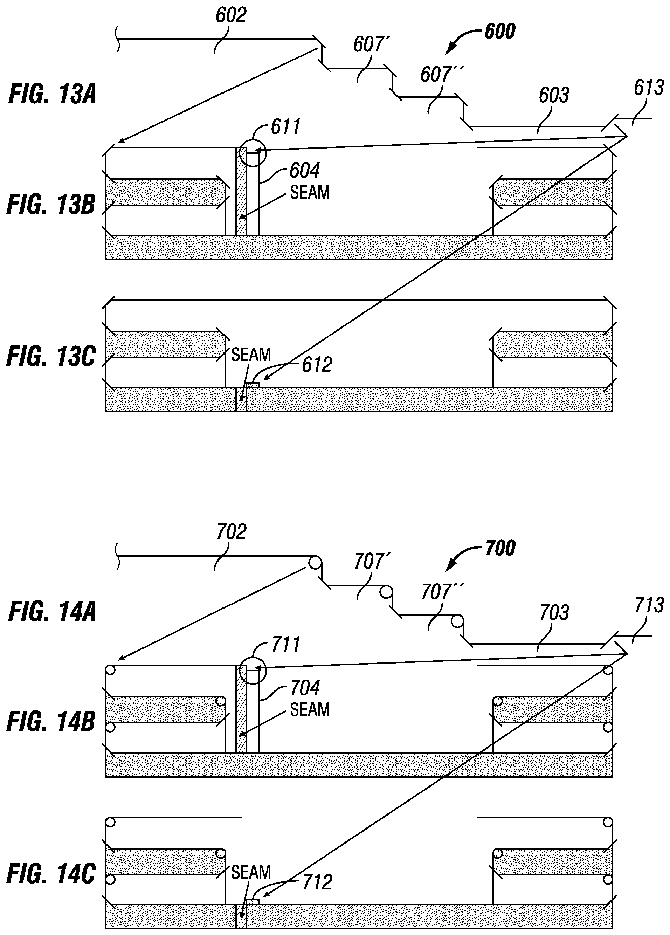

FIG. 13A shows an outline of a portion of one end of a bag with a step cut end, corresponding to a mirror image of the region marked as "A" in FIG. 11, detailing an alternate embodiment with angled portions between the back panel of the bag and the side wall, between the 2 sections of the side wall, and between the side wall and the front panel of the bag, and a tab feature at one end of the bag that extends into the seam. FIG. 13B shows an image of the top end of the bag depicted in FIG. 13A upon sealing the seam. FIG. 13C shows an image of the bottom end of the bag depicted in FIG. 13A upon sealing the seam.
FIG. 14A shows an outline of a portion of one end of a bag with a step cut end, corresponding to a mirror image of the region marked as "A" in FIG. 11, detailing an alternate embodiment with a combination of radial (circular) and angled portions between the back panel of the bag and the side wall, between the 2 sections of the side wall, and between the side wall and the front panel of the bag, and a tab feature at one end of the bag that extends into the seam. FIG. 14B shows an image of the top end of the bag depicted in FIG. 14A upon sealing the seam. FIG. 14C shows an image of the bottom end of the bag depicted in FIG. 14A upon sealing the seam.
FIG. 15A is a depiction of a bag with a sealing tape covering an easy open feature.
FIG. 15B is a depiction of the bag of claim 15A with the sealing tape over the easy open feature partially opened along the lines of the two strings.
FIG. 15C is a depiction of the bag of claim 15B with the easy open feature almost completely uncovered.
FIG. 16A-C are depictions of a bag with a sealing tape and a narrower strip of tape adhered to the top of the sealing tape in a closed (A) state, with the tab piece raised (B) and further opened (C).
FIG. 17A is a depiction of a bag of the disclosure with an easy open feature.
FIG. 17B is a depiction of a bag of the disclosure with an easy open feature includes a thumb tab.
FIG. 18 shows a flush cut bag with an easy open feature comprising a square cut through the bag located near the top end of the bag according to one embodiment of the present disclosure.
FIG. 19 shows a flush cut bag with an easy open feature comprising a carat cut through the bag located near the top end of the bag according to one embodiment of the present disclosure.
FIG. 20 shows a flush cut bag with an easy open feature comprising a semi-circular cut through the bag located near the top end of the bag according to one embodiment of the present disclosure.
FIG. 21 shows a pull tab comprising a promotional coupon according to one embodiment of the present disclosure.
FIG. 22 shows a flush cut bag with an easy open feature comprising a square cut through the bag located near the bottom end of the bag according to one embodiment of the present disclosure.
FIG. 23 shows a pinch cut bag with an easy open feature comprising a square cut through the bag located near the bottom end of the bag according to one embodiment of the present disclosure.
FIG. 24 shows a pinch cut bag with an easy open feature comprising a square cut through the bag located near the top end of the bag according to one embodiment of the present disclosure.
FIG. 25 shows an outline of a pinch cut bag with an easy open feature comprising a square cut through the bag located near the bottom end of the front panel of the bag according to one embodiment of the present disclosure.
FIG. 26 shows an outline of a pinch cut bag with an easy open feature comprising a square cut through the bag located near the top end of the front panel of the bag according to one embodiment of the present disclosure.
FIG. 27 shows an outline of a pinch cut bag with an easy open feature comprising a carat cut through the bag located near the top end of a side panel of the bag and extending through the side panel according to one embodiment of the present disclosure.
FIG. 28 shows an outline of a pinch cut bag with an easy open feature comprising a carat cut through the bag located near the top end of a side panel of the bag and extending across the entire length of the bag according to one embodiment of the present disclosure.
FIG. 29 shows an outline of a pinch cut bag with an easy open feature comprising a carat cut through the bag located near the top end of a side panel of the bag and extending across the side panel and the front panel of the bag according to one embodiment of the present disclosure.
FIG. 30 shows an outline of a pinch cut bag with an easy open feature comprising a bidirectional square cut through the bag located near the top end of the front panel of the bag and extending into both side panels according to one embodiment of the present disclosure.
FIG. 31 shows a back side view of a pinch cut bag according to one embodiment of the present disclosure.
FIG. 32 shows a front side view of a printed pinch cut bag with an easy open feature comprising a square cut through the bag located near the top end of the bag according to one embodiment of the present disclosure.
FIG. 33 shows a cross-sectional view of a top end or bottom end portion of a pinch cut bag according to one embodiment of the present disclosure.
FIG. 34 shows an isometric view of a pinch cut bag according to one embodiment of the present disclosure.
FIG. 35 shows a front view of a portion of a wall of a bag folded over and to create a flap and attached to the opposite face of the bag.
FIG. 36 shows a front view of a bag partially opened by peeling a portion of an overlay portion of the flap.

### DETAILED DESCRIPTION OF THE PREFERRED EMBODIMENT

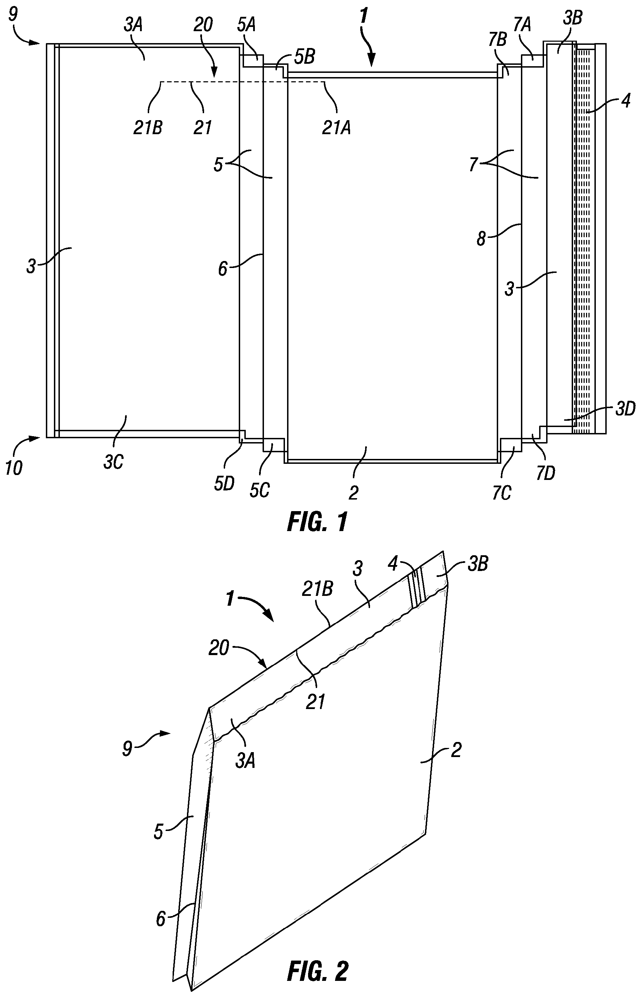

Referring to FIG. 1, a planar view of an embodiment of a substantially flat sheet of material from which a "step cut" bag 1 according to the enclosed claims is to be formed is shown. Shown on the sheet are front wall 2, rear wall 3, seam 4, first side wall 5 having gusset portion 6, and second side wall 7 having gusset portion 8. As shown in FIG. 1, the bag 1 has a first or top end 9 and a second or bottom end 10, and thus each of the front wall 2, rear wall 3, first side wall 5 and second side wall 7 has a first or top end and a second or bottom end. It will be apparent, however, that the orientation of the bag ends 9 and 10 are unimportant and the "top" and "bottom" references (as well as references to "right" or "left") are useful but may change depending upon the orientation from which one views the bag. Bag 1 is considered a "step cut" bag because the front wall 2, the first side wall 5 and the second side wall 7, and the rear wall 3 are cut so that the front wall 2, the first side wall 5 and the second side wall 7, and the rear wall 3 have different lengths on one end (or both ends) of the bag. As shown in FIG. 1, the first side wall 5 and the second side wall 7 are cut to different lengths on either side of the gusset portion 6 and 8, respectively. As shown in FIG. 1 the first end 9 of bag 1 has portions 3a and 3b of the rear wall 3 of the bag that extend further from the body of the bag 1 than do portions 5a and 7a of the first side wall 5 and second side wall 7, respectively, which in turn extend further from the body of the bag 1 than do portions 5b and 7b of the first side wall 5 and second side wall 7, respectively, which in turn extend further from the body of the bag 1 than does the top end of the front wall 2 of the bag 1. In addition, the bottom end of the front wall 2 at the second end 10 of bag 1 extends further from the body of the bag 1 than do portions 5c and 7c of the first side wall 5 and second side wall 7, respectively, which in turn extend further from the body of the bag 1 than do portions 5d and 7d of the first side wall 5 and second side wall 7, respectively, which in turn extend further from the body of the bag 1 than do portions 3c and 3d the bottom end of the rear wall 3 of the bag 1. Therefore, in the embodiment shown in FIG. 1 both of the ends of the bag 1 have a "step cut." Also shown is weakened portion 20, which in this embodiment is near the first end 9 of the bag 1 and comprises a plurality of perforations 21 extending from a first end 21a on the front wall 2 of the bag 1 across the first side wall 5 of the bag 1 to a second end 21b on the rear wall 3 of the bag 1. The weakened area may be on or near the fold line (not shown) for closing or sealing the first end 9 of the bag 1. This weakened portion can be opened with less force than required to open or tear other portions of the bag 1.

Referring to FIG. 2, the upper portion of the bag 1 from FIG. 1 is shown after forming a tube from the bag sheet and then separating a portion of the tube to form a bag and sealing the first end 9 of the bag 1. Visible in FIG. 2 is front wall 2, back wall 3 having portions 3a and 3b, seam 4, first side wall 5 having gusset portion 6, and weakened portion 20 comprising a plurality of perforations 21 terminating at second end 21b.

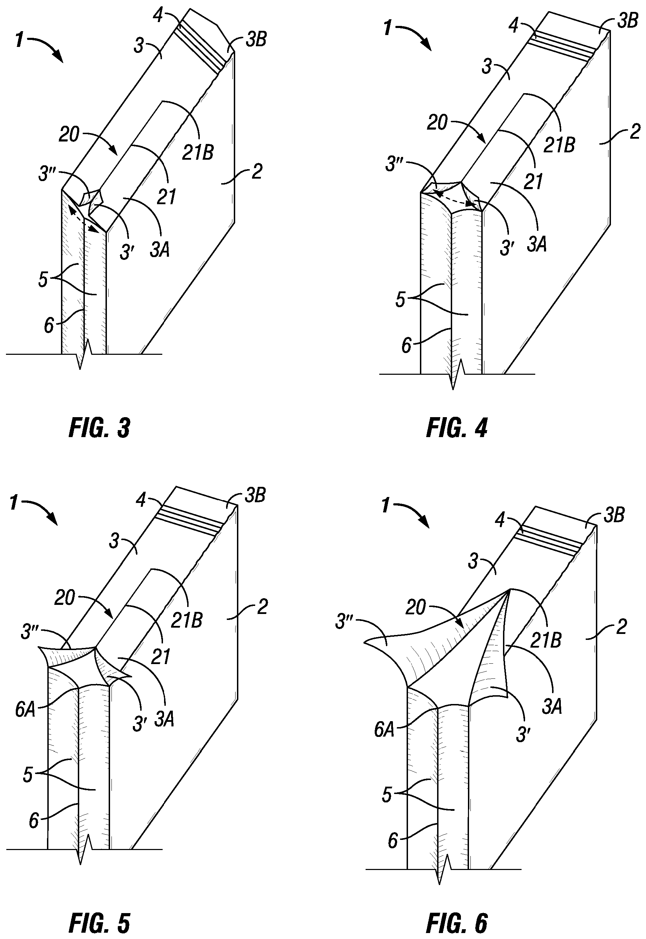

Bag 1 can be opened as shown in FIG. 3 through FIG. 6. FIG. 3 once again shows the upper portion of the bag 1 from FIG. 2, and visible is front wall 2, back wall 3 having portions 3a and 3b, seam 4, first side wall 5 having gusset portion 6, and weakened portion 20 comprising a plurality of perforations 21 terminating at second end 21b. Bag 1 may be opened by initially pulling on the portions 3' and 3" of the rear wall 3 on both sides of the plurality of perforations 21, which creates a tear in the weakened portion 20 of the bag 1 and begins separating the portions of the first side wall 5 that are separated by the gusset portion 6. In FIG. 4 the portions 3' and 3" of the rear wall 3 on both sides of the plurality of perforations 21 are further pulled apart, resulting in the expansion of the tear in the weakened portion 20 toward the second end 21b of the plurality of perforations 21. Additionally visible in FIG. 4 are front wall 2, back wall 3 having portions 3a and 3b, seam 4, and first side wall 5 having gusset portion 6. In FIG. 5 the portions 3' and 3" of the rear wall 3 on both sides of the plurality of perforations 21 are pulled completely apart, resulting in the expansion of the tear in the weakened portion 20 further toward the second end 21b of the plurality of perforations 21 and to the first end 21a of the plurality of perforations (not visible in FIG. 5). This results in uncovering the top end 6a of the gusset portion 6 of the first side wall 5, which can then be pulled open. Additionally visible in FIG. 5 are front wall 2, back wall 3 having portions 3a and 3b, and seam 4. In FIG. 6 the plurality of perforations 21 are pulled completely apart, resulting in the expansion of the tear in the weakened portion 20 to the second end 21b of the plurality of perforations 21. This results in a large opening in bag 1 that can be used to pour out the contents of the bag 1. Additionally visible in FIG. 6 are front wall 2, back wall 3 having portions 3a, 3b, 3' and 3", seam 4, first side wall 5 and gusset portion 6 having a top end 6a.

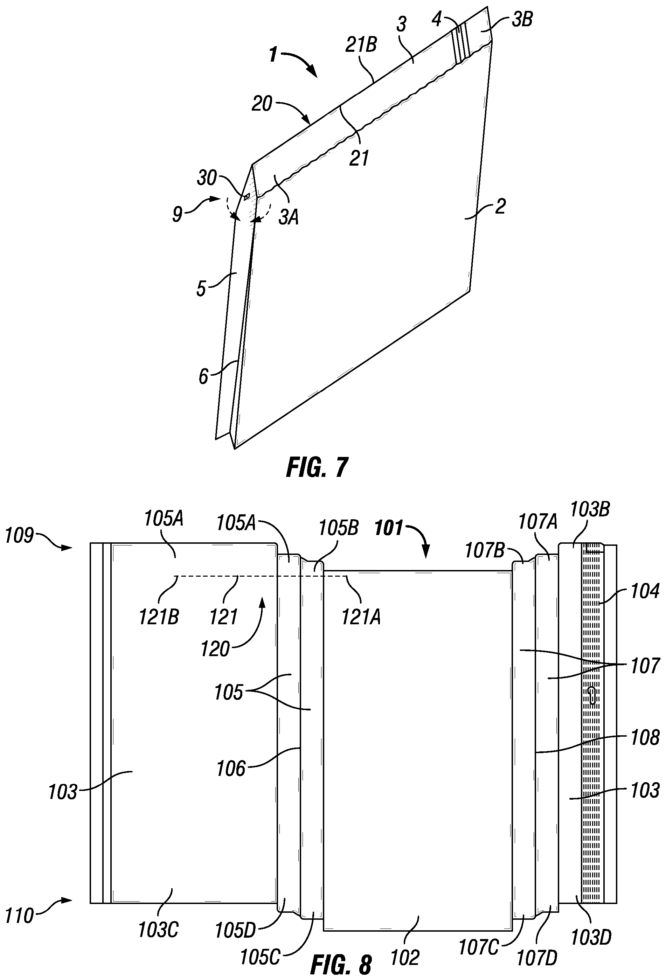

Referring to FIG. 7, the upper portion of the bag 1 from FIG. 1 is shown after sealing the first end 9 of the bag 1, with optional adhesive 30 located near the top end of the first side wall 5, which serves to keep the top end of the first side wall 5 closed (see arrows). Although not visible in FIG. 7, the optional adhesive can also be applied near the top end of the second side wall. Although shown as a spot in FIG. 7, the adhesive can be applied in any manner that results in the closure of the top end of the first side wall 5, for example as a strip that runs from the edge of the intersection of the first side wall 5 and the back wall 3 to the edge of the intersection of the first side wall 5 and the front wall 2. Also visible in FIG. 7 is front wall 2, back wall 3 having portions 3a and 3b, seam 4, first side wall 5 having gusset portion 6, and weakened portion 20 comprising a plurality of perforations 21 terminating at second end 21b.

Once the bag 1 is sealed at one end, it can be filled with the desired contents or filling materials. For example, it has been found that a bag 1 with dimensions of 41.9 cm by 16.5 cm by 100.3 cm (16.5 inches by 6.5 inches by 39.5 inches) can durably hold up to about 25 kg (fifty five (55) pounds) of material without showing undue stress, undue tearing, undue breakage, undue deformation, or leakage or the like. It is believed that any bulk material can be contained by bag 1, and in certain embodiments the contents can weigh up to 45.4 kg (100 pounds) or so without undue risk of tearing or damage to bag 1. Once the bag 1 is filled, the second end typically needs to be sealed. The second end of the bag 1 can be sealed in a similar manner as that described above. Alternatively, the bag 1 can have its second end sealed by conventional means such as sewing. Still another approach is to stitch the second end, and then seal the second end in a manner like that described above (not shown). Although not shown, those skilled in the art will understand and appreciate that a second end of bag 1 can be sealed using any conventional technique once bag 1 has been filled with the selected amount of the desired material.

Referring to FIG. 8, a planar view of an embodiment of a substantially flat sheet of material from which a "step cut" bag 101 according to the enclosed claims is to be formed is shown. Shown on the sheet are front wall 102, rear wall 103, seam 104, first side wall 105 having gusset portion 106, and second side wall 107 having gusset portion 108. As shown in FIG. 8, the bag 101 has a first or top end 109 and a second or bottom end 110, and thus each of the front wall 102, rear wall 103, first side wall 105 and second side wall 107 has a first or top end and a second or bottom end. It will be apparent, however, that the orientation of the bag ends 109 and 110 are unimportant and the "top" and "bottom" references are useful but may change depending upon the orientation from which one views the bag. Bag 101 is considered a "step cut" bag because the front wall 102, the first side wall 105 and the second side wall 107, and the rear wall 103 are cut so that the front wall 102, the first side wall 105 and the second side wall 107, and the rear wall 103 have different lengths on one end (or both ends) of the bag. As shown in FIG. 8, the first side wall 105 and the second side wall 107 are cut to different lengths on either side of the gusset portion 106 and 108, respectively. As shown in FIG. 8 the first end 109 of bag 101 has portions 103a and 103b of the rear wall 103 of the bag that extend further from the body of the bag 101 than do portions 105a and 107a of the first side wall 105 and second side wall 107, respectively, which in turn extend further from the body of the bag 101 than do portions 105b and 107b of the first side wall 105 and second side wall 107, respectively, which in turn extend further from the body of the bag 101 than does the top end of the front wall 102 of the bag 101. In addition, the bottom end of the front wall 102 at the second end 110 of bag 101 extends further from the body of the bag 101 than do portions 105c and 107c of the first side wall 105 and second side wall 107, respectively, which in turn extend further from the body of the bag 101 than do portions 105d and 107d of the first side wall 105 and second side wall 107, respectively, which in turn extend further from the body of the bag 101 than do portions 103c and 103d the bottom end of the rear wall 103 of the bag 101. Therefore, in the embodiment shown in FIG. 8 both of the ends of the bag 101 have a "step cut." In addition, the portions 105a and 105b, 107a and 107b, 105c and 105d, and 107c and 107d are not separated by a straight line, but rather by an angled cut (see circles). Although in FIG. 8 this cut is shown as about 45°, the angle can vary in different embodiments (not shown), such as from 15° to 75° with respect to the top end of the bag wall. This angled cut serves to further prevent leakage of contents out of the bag, or infestation of organisms into the contents of the bag. Also shown is weakened portion 120, which in this embodiment is near the first end 109 of the bag 101 and comprises a plurality of perforations 121 extending from a first end 121a on the front wall 102 of the bag 101 across the first side wall 105 of the bag 101 to a second end 121b on the rear wall 103 of the bag 101. The weakened area is generally on or near the fold line (not shown) for closing or sealing the first end 109 of the bag 101. This weakened portion can be opened with less force than required to open or tear other portions of the bag 101.

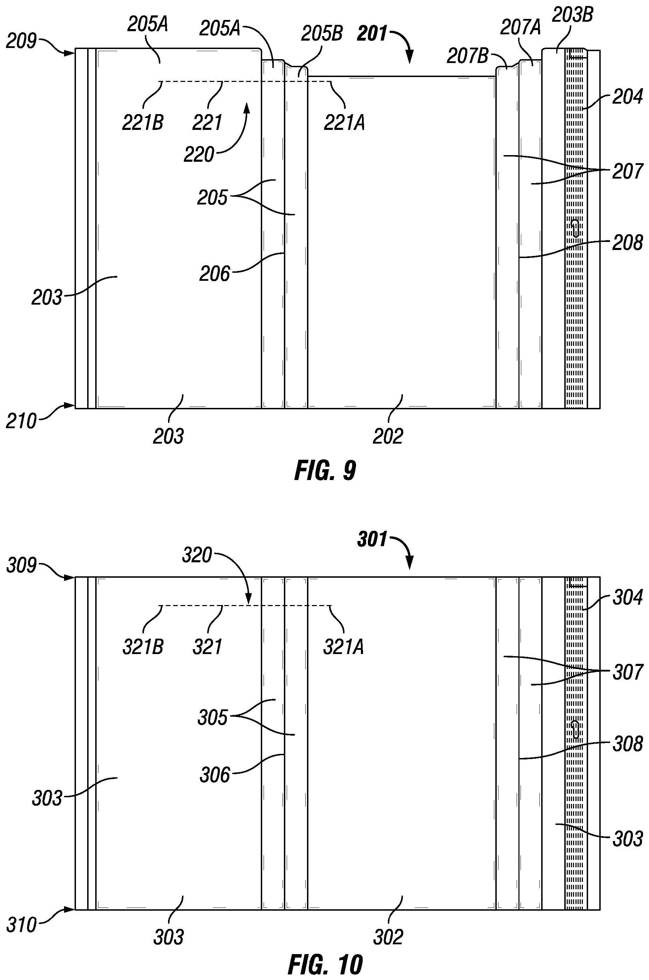

Referring to FIG. 9, a planar view of an embodiment of a substantially flat sheet of material from which a bag 201 according to the enclosed claims is to be formed is shown. Shown on the sheet are front wall 202, rear wall 203, seam 204, first side wall 205 having gusset portion 206, and second side wall 207 having gusset portion 208. As shown in FIG. 9, the bag 201 has a first or top end 209 and a second or bottom end 210, and thus each of the front wall 202, rear wall 203, first side wall 205 and second side wall 207 has a first or top end and a second or bottom end. It will be apparent, however, that the orientation of the bag ends 209 and 210 are unimportant and the "top" and "bottom" references are useful but may change depending upon the orientation from which one views the bag. The top end 209 of bag 201 is has a "step cut" because the front wall 202, the first side wall 205 and the second side wall 207, and the rear wall 203 are cut so that the front wall 202, the first side wall 205 and the second side wall 207, and the rear wall 203 have different lengths. As shown in FIG. 9, the first side wall 205 and the second side wall 207 are cut to different lengths on either side of the gusset portion 206 and 208, respectively. As shown in FIG. 9 the first end 209 of bag 201 has portions 203a and 203b of the rear wall 203 of the bag 201 that extend further from the body of the bag 201 than do portions 205a and 207a of the first side wall 205 and second side wall 207, respectively, which in turn extend further from the body of the bag 201 than do portions 205b and 207b of the first side wall 205 and second side wall 207, respectively, which in turn extend further from the body of the bag 201 than does the top end of the front wall 202 of the bag 201. In the embodiment shown in FIG. 9, the bottom end of the front wall 202, the first side wall 205, the second side wall 207, and the rear wall 203 at the second end 210 of bag 201 each extend the same distance from the body of the bag 201. Therefore, in the embodiment shown in FIG. 9 the bottom end 210 of the bag 201 has what is sometimes referred to as a "flush cut." Although not shown, in certain embodiments the top end of the bag can be flush cut, and the bottom end of the bag can be step cut. Also shown is weakened portion 220, which in this embodiment is near the first end 209 of the bag 201 and comprises a plurality of perforations 221 extending from a first end 221a on the front wall 202 of the bag 201 across the first side wall 205 of the bag 201 to a second end 221b on the rear wall 203 of the bag 201. The weakened area is generally on or near the fold line (not shown) for closing or sealing the first end 209 of the bag 201. This weakened portion can be opened with less force than required to open or tear other portions of the bag 201.

Referring to FIG. 10, a planar view of an embodiment of a substantially flat sheet of material from which a flush cut bag 301 according to the enclosed claims is to be formed is shown. Shown on the sheet are front wall 302, rear wall 303, seam 304, first side wall 305 having gusset portion 306, and second side wall 307 having gusset portion 308. As shown in FIG. 10, the bag 301 has a first or top end 309 and a second or bottom end 310, and thus each of the front wall 302, rear wall 303, first side wall 305 and second side wall 307 has a first or top end and a second or bottom end. It will be apparent, however, that the orientation of the bag ends 309 and 310 are unimportant and the "top" and "bottom" references are useful but may change depending upon the orientation from which one views the bag. The top end 309 of bag 301 has a "flush cut" because the front wall 302, the first side wall 305 and the second side wall 307, and the rear wall 303 are cut to the same length. In the embodiment shown in FIG. 10, the bottom end of the front wall 302, the first side wall 305, the second side wall 307, and the rear wall 303 at the second end 310 of bag 301 each extend the same distance from the body of the bag 301. Therefore, in the embodiment shown in FIG. 10 the bottom end 310 of the bag 301 also has a "flush cut." Also shown is weakened portion 320, which in this embodiment is near the first end 309 of the bag 301 and comprises a plurality of perforations 321 extending from a first end 321a on the front wall 302 of the bag 301 across the first side wall 305 of the bag 301 to a second end 321b on the rear wall 303 of the bag 301. The weakened area is generally on or near the fold line (not shown) for closing or sealing the first end 309 of the bag 301. This weakened portion can be opened with less force than required to open or tear other portions of the bag 301.

Referring to FIG. 11, a planar view of an embodiment of a substantially flat sheet of material from which a "step cut" bag 401 according to the enclosed claims is to be formed is shown. Shown on the sheet are front wall 402, rear wall 403, seam 404, first side wall 405 having first gusset portion 406, and second side wall 407 having second gusset portion 408. As shown in FIG. 11, the bag 401 has a first or top end 409 and a second or bottom end 410, and thus each of the front wall 402, rear wall 403, first side wall 405 and second side wall 407 has a first or top end and a second or bottom end. It will be apparent, however, that the orientation of the bag ends 409 and 410 are unimportant and the "top" and "bottom" references are useful but may change depending upon the orientation from which one views the bag. Bag 401 is considered a "step cut" bag because the front wall 402, the first side wall 405 and the second side wall 407, and the rear wall 403 are cut so that the front wall 402, the first side wall 405 and the second side wall 407, and the rear wall 403 have different lengths on both ends of the bag. As shown in FIG. 11, the first side wall 405 and the second side wall 407 are cut to different lengths on either side of the gusset portion 406 and 408, respectively. As shown in FIG. 11 the first end 409 of bag 401 has portions 403a and 403b of the rear wall 403 of the bag that extend further from the body of the bag 401 than do portions 405a and 407a of the first side wall 405 and second side wall 407, respectively, which in turn extend further from the body of the bag 401 than do portions 405b and 407b of the first side wall 405 and second side wall 407, respectively, which in turn extend further from the body of the bag 401 than does the top end of the front wall 402 of the bag 401. In addition, the bottom end of the front wall 402 at the second end 410 of bag 401 extends further from the body of the bag 401 than do portions 405c and 407c of the first side wall 405 and second side wall 407, respectively, which in turn extend further from the body of the bag 401 than do portions 405d and 407d of the first side wall 405 and second side wall 407, respectively, which in turn extend further from the body of the bag 401 than do portions 403c and 403d the bottom end of the rear wall 403 of the bag 401. Therefore, in the embodiment shown in FIG. 11 both of the ends of the bag 401 have a "step cut." However, the skilled artisan will readily appreciate that in other embodiments (not shown), one or both ends of the bag can be a different type of step cut, or another type of cut altogether, for example a flush cut end as described herein. As shown in FIG. 11, the portions 403a and 405a, 405b and 402a, 402a and 407b, 407a and 403b, 403c and 405d, 405c and 402c, 402c and 407c, and 407d and 403d, respectively, are separated from one another not by straight lines and right angles but by curved portions or edges, which in FIG. 11 are shown as radial (circular) elements. Although one particular size and shape of radial portion is shown in FIG. 11, for the features between the foregoing portions, those skilled in the art will appreciate that in other embodiments (not shown), these radial portions can be as small or as large as desired. In addition, the portions 405a and 405b, 407a and 407b, 405c and 405d, and 407c and 407d, respectively, are not defined or separated by a radial portion or edge, but rather an angled portion or edge (see circles). Although in FIG. 11 this angled portion is shown as about 45° with respect to the top end of the front wall, the angle can vary in different embodiments (not shown). These radial and angled portions serve to further prevent breakage, leakage of contents out of the bag, or infestation of organisms into the contents of the bag, by providing extra material at one end of the bag that improves sealing. Further shown in FIG. 11 is cut-out 411 and corresponding tab 412 at opposing ends of the seam 404. Since the bag 401 is formed from a continuous sheet of material, the formation of the cut-out 411 (removal of material) at one end of the bag 401 results in a tab 412 (extra material) at the other end of the bag 401. The cut out 411 and tab 412 extend into the seam 404, and also serve to further prevent breakage, leakage of contents out of the bag, or infestation of organisms into the contents of the bag. This is because since extra material can be present between the seam 404 of the bag and the edge of the rear panel 403b of the bag that is not sealed, a hole can be present that can serve as an access point into or out of the sealed bag. But the presence of the cut-out 411 and the tab 412 ensures that the ends of any such hole will be sealed, preventing access into or out of the sealed bag. The cut-out 411 and tab 412 can be any depth/height desired, and can extend further into the seam as desired (not shown). Although in FIG. 11 the cut-out 411 and tab 412 are shown as extending from within the seam 404 to the edge of the rear panel 403b of the bag, in other embodiments (not shown) the cut-out and tab can extend from within the seam 404 only a portion of the distance to the edge of the rear panel 403b of the bag 401. Furthermore as shown, the tab and cut-out are illustrated as primarily rectangular in shape. It is understood that the shape is not limited to rectangles but can also be configured as an angular or rounded cut-out and matching tab as long as the configuration fits together to form a seal effective to prevent leakage or infestation. Additionally, in other embodiments (not shown), the bag can comprise an easy open or easy access feature, such as the weakened portion near the top of the bag as shown herein above (for example in FIG. 8), or one or more of the easy open features detailed in United States Patent Application Publication Number US 2013/0206631 and/or United States Patent Application Publication Number US 2013/0209002.

Referring to FIG. 12, a planar view of the top portion of an embodiment of a substantially flat sheet of material from which a bag 501 according to the enclosed claims is to be formed is shown. Shown on the sheet are front wall 502, rear wall 503, seam 504, first side wall 505 having first gusset portion 506, and second side wall 507 having second gusset portion 508. As shown in FIG. 12, the bag 501 has a first or top end 509 and a second or bottom end 510 (not visible in FIG. 12), and thus each of the front wall 502, rear wall 503, first side wall 505 and second side wall 507 has a first or top end and a second or bottom end. It will be apparent, however, that the orientation of the bag ends 509 and 510 are unimportant and the "top" and "bottom" references are useful but may change depending upon the orientation from which one views the bag. The top end 509 of bag 501 has a "step cut" because the front wall 502, the first side wall 505 and the second side wall 507, and the rear wall 503 are cut so that the front wall 502, the first side wall 505 and the second side wall 507, and the rear wall 503 have different lengths. As shown in FIG. 12, the first side wall 505 and the second side wall 507 are cut to different lengths on either side of the gusset portion 506 and 508, respectively. As shown in FIG. 12 the first end 509 of bag 501 has portions 503a and 503b of the rear wall 503 of the bag 501 that extend further from the body of the bag 501 than do portions 505a and 507a of the first side wall 505 and second side wall 507, respectively, which in turn extend further from the body of the bag 501 than do portions 505b and 507b of the first side wall 505 and second side wall 507, respectively, which in turn extend further from the body of the bag 501 than does the top end of the front wall 502 of the bag 501. As shown in FIG. 12, the portions 503a and 505a, 505a and 505b, 505b and 502a, 502a and 507b, 507b and 507a, and 507a and 503b, respectively, are separated not by straight lines and right angles but by curved portions or edges, such as radial (circular) portions as shown. Although one particular size and shape of the curved portions is shown in FIG. 12, those skilled in the art will understand that in other embodiments (not shown) these curved edges can be of different shapes (*e.g.,* elliptical, or different segments of a curve, *etc.*), and can be as small or as large as desired. These curved portions serve to further prevent breakage or leakage of contents out of the bag, or infestation of organisms into the contents of the bag. Further shown in FIG. 12 is cut-out 511 at one end of the seam 504 (corresponding tab 512 at the other end of the seam 504 is not shown in FIG. 12). Since the bag 501 is formed from a continuous sheet of material, formation of the cut-out 511 (removal of material) at one end of the bag 501 results in a tab (extra material; not shown in FIG. 12) at the other end of the bag 501. The cut out 511 and tab (not shown in FIG. 12) extend into the seam 504, and also serve to further prevent breakage, leakage of contents out of the bag, or infestation of organisms into the contents of the bag. The cut-out 511 and tab (not shown) can be any depth/height desired, and can extend further into the seam as desired (not shown). Although in FIG. 12 the cut-out 511 (and corresponding tab, not shown) is shown as extending from within the seam 504 to the edge of the rear panel 503b of the bag, in other embodiments (not shown) the cut-out (and tab) can extend from within the seam 504 only a portion of the distance to the edge of the rear panel 503b of the bag. Additionally, in other embodiments (not shown), the bag can comprise an easy open or easy access feature, such as the weakened portion near the top of the bag as shown herein above (for example in FIG. 8), or one or more of the easy open features detailed in United States Patent Application Publication Number US 2013/0206631 and/or United States Patent Application Publication Number US 2013/0209002.

Referring to FIG. 13A, shown is an outline of a portion of one end of a bag 600 according to the enclosed claims with a step cut end, generally corresponding to a mirror image of the region marked as "A" in FIG. 11, detailing an alternate embodiment with angled portions between the front panel 602 of the bag and the first section of the side wall 607', between the first section of the side wall 607' and the second section of the side wall 607", and between the second section of the side wall 607" and the back panel 603 of the bag, respectively, and a feature 613 at one end of the bag that extends into the seam. Since the bag 600 is formed from a continuous sheet of material, the feature 613 forms a cut-out 611 (removal of material; see FIG. 13B) at one end of the bag and a tab 612 (extra material; see FIG. 13C) at the other end of the bag. FIG. 13B shows an image of one end of the bag depicted in FIG. 13A upon sealing the seam 604, showing cut-out 611. FIG. 13C shows an image of the other end of the bag depicted in FIG. 13A upon sealing the seam 604, showing the tab 612.

Referring to FIG. 14A, shown is an outline of a portion of one end of a bag 700 according to the enclosed claims with a step cut end, generally corresponding to a mirror image of the region marked as "A" in FIG. 11, detailing an alternate embodiment with a combination of radial and angled cuts between the front panel 702 of the bag and the first section of the side wall 707', between the first section of the side wall 707' and the second section of the side wall 707", and between the second section of the side wall 707" and the back panel 703 of the bag, respectively, and a feature 713 at one end of the bag 700 that extends into the seam. Since the bag 700 is formed from a continuous sheet of material, the feature 713 forms a cut-out 711 (removal of material; see FIG. 14B) at one end of the bag 700 and a tab 712 (extra material; see FIG. 14C) at the other end of the bag 700. FIG. 14B shows an image of one end of the bag depicted in FIG. 14A upon sealing the seam 704, showing cut-out 711. FIG. 14C shows an image of the other end of the bag depicted in FIG. 14A upon sealing the seam 704, showing the tab 712.

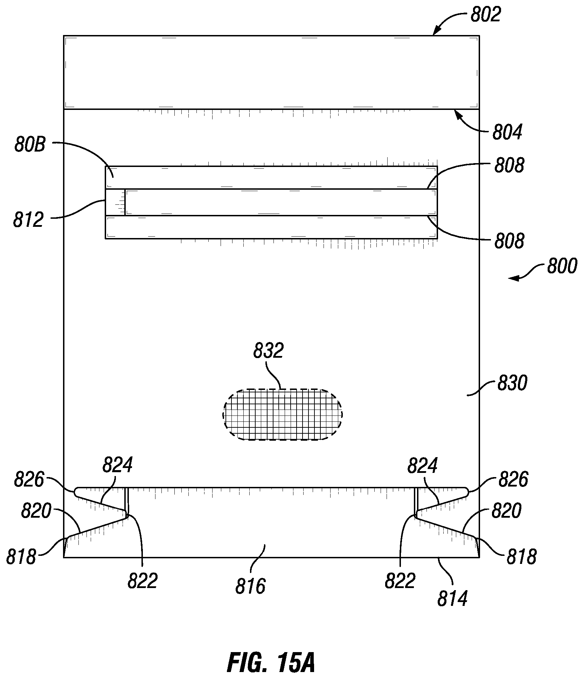

A partial view of a bag according to the enclosed claims with an easy open feature is shown in FIG. 15A-C. In FIG. 15A, bag **800** is an example of a bag with the disclosed sealing tape covered weakened area. The top or bottom end **802** is sealed in FIG 15A by folding the top over to a seal line **804** and bonding to seal the opening. A cut out in the surface of the bag is shown to reveal the inner, woven polymer layer of a multi-layered bag as described herein, in which laminated bags can be composed of two or more layers including a woven polymer layer.

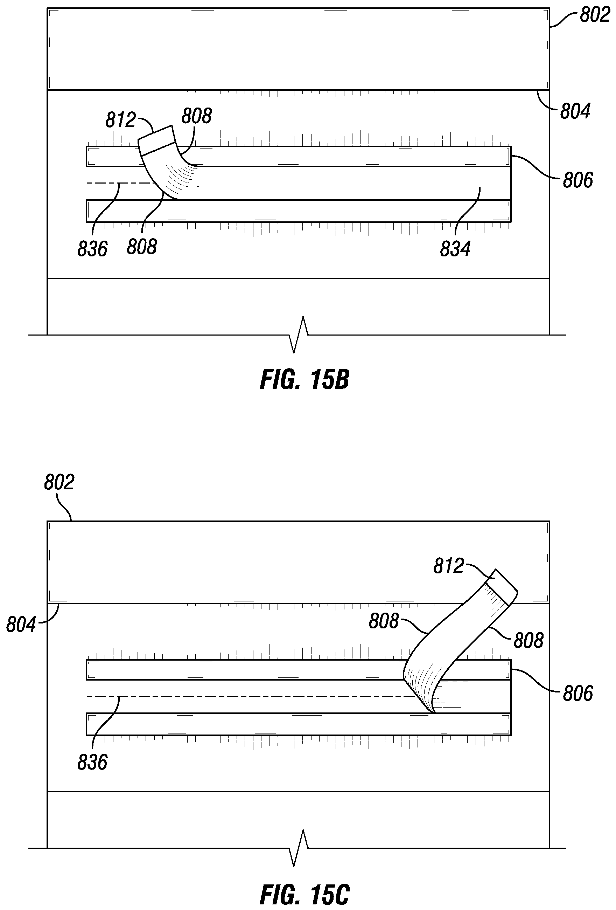

An easy open feature includes a sealing tape **806** covering a weakened area (visible in FIGs. 15B and 15C). The sealing tape includes two strings **808** affixed to the bottom or embedded in the sealing tape and running the length of the sealing tape and a tab **812** at one end. The tab area is not affixed to the surface of the bag, and in certain embodiments is free of adhesive and in certain embodiments is free of adhesive at least on the bottom surface. As seen in FIG 15A, the unsealed end **814** of the bag is step cut as described herein wherein the junctions **818** between the back wall **816,** the back **820** and front side walls **824** at the gusset fold lines **822,** and the junction **826** of the front side wall with the front wall **830** are curves, non-right angles or combinations of curves and non-right angles.

Fig. 15B is a view of the bag of Fig. 15A in which the sealing tape has been partially raised in preparation for opening the bag by pulling up on the tab **812** separating the center section of the tape **834** along the line of the strings **808** and exposing the weakened area **836** in the front wall **830** of the bag. FIG. 15C shows a bag in which the center section of the sealing tape is further removed, exposing more of the weakened area. In the embodiment shown the weakened area is a line of perforations. When the center portion of the sealing tape is removed, the bag can be easily opened by pushing or running a finger along the line of perforations. The easy open feature that is composed of a line of perforations or cuts **836** is visible below the area where the tape has been lifted off the surface of the bag. In Fig. 15C the tape has been further removed revealing more of the weakened area **836.**

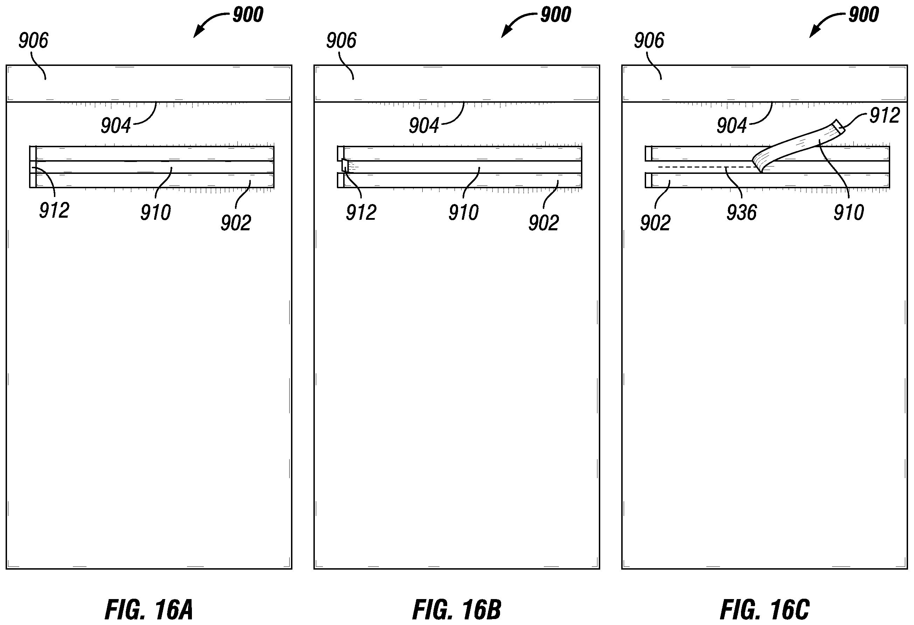

A partial view of a bag according to the enclosed claims with an easy open feature is shown in FIG. 16A-C. In FIG. 16A, bag **900** is an example of a bag with a sealing tape covered weakened area. The top or bottom end, **906** which is nearer to the easy open feature, is sealed in FIG. 16A by folding the top over to a seal line **904** and bonding to seal the opening. An easy open feature includes a sealing tape **902** covering a weakened area. The sealing tape includes a narrower strip of tape **910** affixed to the surface of the bag or to the bottom or top surface of the sealing tape and running the length of the sealing tape. The sealing tape includes a tab **912** at one end. The tab area is not affixed to the surface of the bag, and in certain embodiments is free of adhesive and in certain embodiments is free of adhesive at least on the bottom surface. FIG. 16B is a view of the bag of Fig. 16A in which the narrower strip of tape **910** down the center of the sealing tape **902** has been lifted by the tab end in which the tab **912** is shown not to be adhered to the surface of the bag. Fig. 16C is a view of the bag in which the tape has been lifted by the tab end to partially reveal the weakened area **914** in the surface of the bag below the tape.

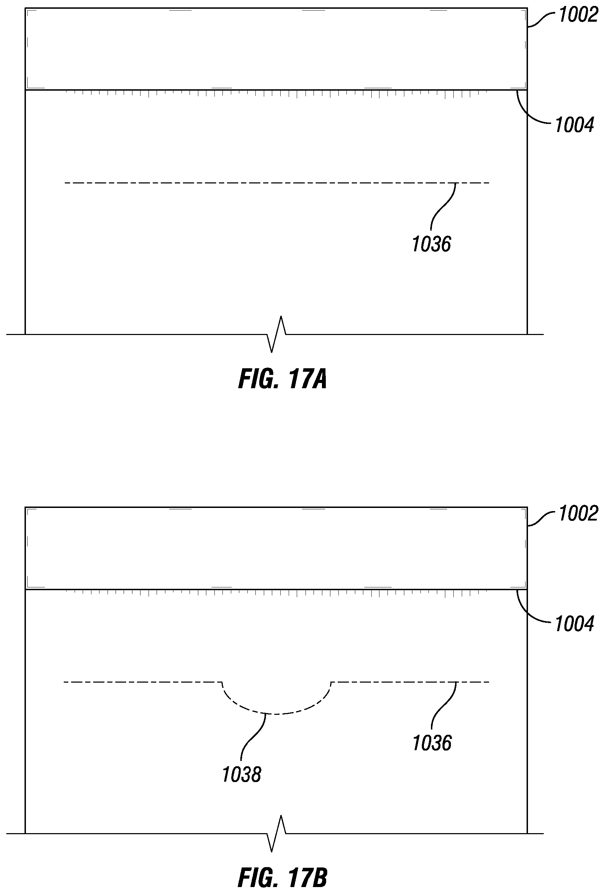

Figs. 17A and 17B are partial views of a bag with an easy open feature as described for the bags shown in Fig. 15A-C and/or 16A-C in which the sealing tape has not been applied. The weakened area shown in Fig. 17A is a line of perforations **1036** extending across the face of the front or rear wall of the bag in a line substantially parallel to the sealed top or bottom edge **1002** of the front or back wall of the bag. The bag is sealed by folding over the edge to a seal line **1004** and bonding the folded portion to the face of the front or back wall to seal the bag. The bag shown in Fig. 17B is similar, including a top edge 1002 and seal line 1004. In the embodiment shown in Fig. 17B, the weakened area 1036 includes a curve near the center of the weakened area that serves as a thumb tab **1038.** It is understood that a weakened area can include alternate configurations of perforations or cuts, including but not limited to 2 rows of cuts or perforations, either in parallel or crossing to form an "X", or cuts or perforations that extend from the center of the weakened area in a downward or upward direction relative to the closest end of the bag.

The woven strips create a bag with the requisite strength to hold large amounts of material under stress and are typically not used in smaller bags, holding 4.5 kg (ten pounds) or less because of the increased cost and complexity of producing heavy duty bags. An inner layer of woven flat polymer strips is shown in Fig. 15A as inset **832.**

It should be understood that the perforations may include or may be replaced with cuts which are longer, and may include cuts in various shapes in addition to the thumb tab, and the bags of the present disclosure may have both cuts and perforations. In addition, the cuts and/or perforations may extend entirely through all layers of the bag wall, or may extend through one or more of the bag wall and not through one or more other layers. For example, the perforations may extend through one or more outer film layers and partially but not entirely through the woven layer. In addition, it will be appreciated that the cuts and/or perforations may include one or more cuts and/or perforations which extend through all three bag layers and others which do not, and may include cuts and/or perforations which extend deeper through one or more layers than other cuts and/or perforations. Those skilled in the art will appreciate that the cuts and/or perforations may vary in size and/or in shape, such that, for example, one or more cuts or perforations are greater in length and/or width (and/or depth) than one or more other cuts and/or perforations.

The sealing tape and/or fibers may comprise polymers, such as polypropylene, polyethylene, or combinations thereof, and can include woven polymers or woven polymer strips. It will be appreciated it may be possible to provide a bag in which the two, three, or possibly more layers, as well as the tape and fibers, all comprise a single material or a combination of materials, thus making it much easier to recycle a bag or scrap for manufacturing purposes and also minimized the costs of the bag. For example, the bag wall layers (whether two, three, four, or more layers) may comprise a non-adhesive laminate which is made of a single polymer (such as polyethylene or polypropylene), with the strings and tape also made of the same material or combination thereof as the bag wall layers. In one embodiment, the strings may themselves comprise a braided or woven string with one or more separate fibers or strings braided together (or woven together) to provide greater strength.

In still another embodiment (not shown), a sealing tape and substantially parallel strings may be added to the interior surface of the bag wall. In such an embodiment, a pull tab is provided which extends from the tape and from the exterior surface of the bag wall, or a pull tab can be added to the tape. In such an embodiment, a customer can pull the pull tab and the tape will pull the bag wall defined by the cuts and/or perforations (i.e., the weakened area of the bag wall) with the tape, thus providing an opening for access to the bag contents.

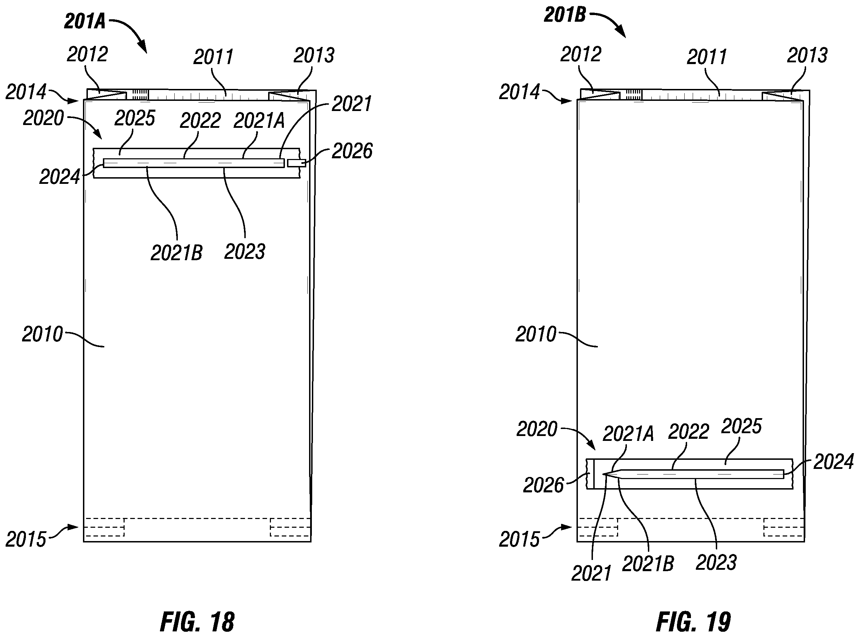

Referring to FIG. 18, the front side view of an embodiment of a "flush cut" bag **2001a** according to the enclosed claims is shown. Bag **2001a** has a front wall **2010,** a back wall **2011,** a first side wall **2012,** a second side wall **2013,** a top end **2014,** and a bottom end **2015.** It will be apparent, however, that the orientation of the bag ends **2014** and **2015** is unimportant and the "top" and "bottom" references are useful but may change depending on the orientation one views the bag. Bag **2001a** is considered a "flush cut" bag because the front wall **2010** and the back wall **2011** are cut so that the ends of the front wall **2010** and the back wall **2011** are essentially "flush" with one another; they have substantially the same length. Bag **2001a** also comprises an easy open feature **2020** near the top end **2014** of the bag **2001a,** which in this embodiment comprises a full cut **2021** in a rectangular shape having a first end **2021a** and a second end **2021b** through the front wall **2010** of bag **2001a,** a first row of perforations **2022** extending from the first end **2021a** of the cut **2021,** a second row of perforations **2023** extending from the second end **2021b** of the cut **2021,** an optional third row of perforations **2024** connecting the end of the first row of perforations **2022** and the second row of perforations **2023,** tape **2025** covering the cut and the rows of perforations, and a pull tab **2026** attached to the tape **2025.** Although in this embodiment the easy open feature **2020** is located near the top end **2014** of the bag **2001a** and the pull tab is located close to the second side wall **2013,** the skilled artisan will realize that the easy open feature **2020** could also be in the opposite orientation, with the pull tab located closer to the first side wall **2012,** reside in either orientation near the bottom end **2015** of the front wall **2010** of bag **2001a,** or reside in either orientation near the top end **2014** or bottom end **2015** on the back wall **2011** of the bag **2001a.** The full cut **2021** can be formed by punching, cutting, or through the use of a laser, or by any other technique known to those skilled in the art. The easy open feature **2020** (in this embodiment the cut **2021** and/or first **2022** or second **2023** row of perforations) provides a portion of bag **2001a** that is weakened. This weakened portion can be opened with less force than required to open or tear other portions of the bag **2001a.**

Bag **2001a** can be opened by pulling the pull tab **2026,** which removes the tape **2025** and the portion of bag **2001a** defined by the cut **2021** and the first, second, and third row of perforations **2022, 2023,** and **2024,** respectively. Although not shown in this embodiment, it will be understood that the full cut **2021** can be larger or smaller, and can extend to a greater or lesser extent, and the first and second rows of perforations **2022** and **2023,** respectfully, can extend any distance from the first end and second end, respectively, of the cut toward the opposite side wall of the bag, for example 50%. 75%, 90% or about 100% of the distance from the ends of the cut to the opposite side of the bag. In addition, although not shown in this embodiment, the tape **2025** can cover less than the full extent of the first and second rows of perforations, whatever distance the rows of perforations extend across the front wall of the bag, and in certain embodiments covers only the full cut portion of the easy open feature **2020.** Additionally, the pull tab **2026** can comprise black and white and/or color printing (not shown), for example a coupon (not shown), and can also be used to reclose the bag.

Referring to FIG. 19, the front side view of another embodiment of a flush cut bag **2001b** according to the enclosed claims is shown. Bag **2001b** also has a front wall **2010,** a back wall **2011,** a first side wall **2012,** a second side wall **2013,** a top end **2014,** and a bottom end **2015.** Bag **2001b** also comprises an easy open feature **2020,** which in this embodiment is near the bottom end **2015** of the bag **2001b** and comprises a full cut **2021** in a triangular or carat shape having a first end **2021a** and a second end **2021b** through the front wall **2010** of bag **2001b,** a first row of perforations **2022** extending from the first end **2021a** of the cut **2021,** a second row of perforations **2023** extending from the second end **2021b** of the cut **2021,** an optional third row of perforations **2024** connecting the end of the first row of perforations **2022** and the second row of perforations **2023,** tape **2025** covering the cut and the rows of perforations, and a pull tab **2026** attached to the tape **2025.**

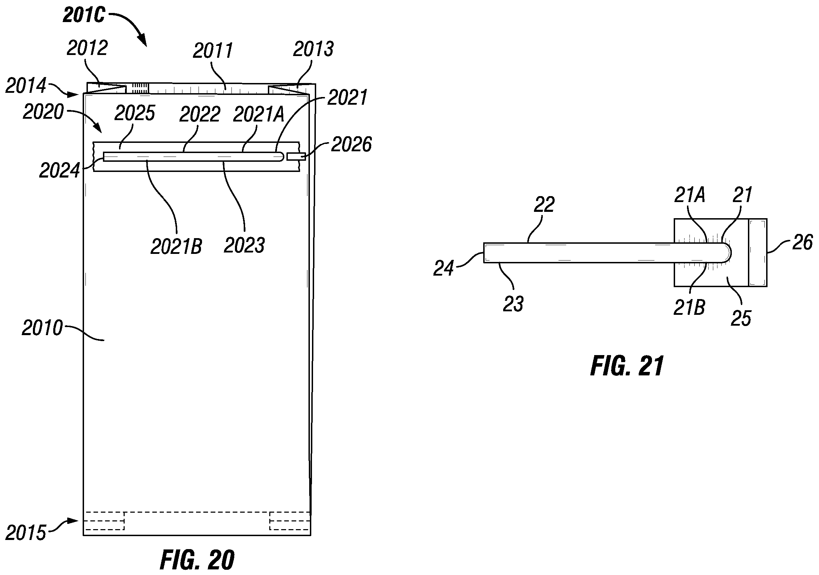

Referring to FIG. 20, the front side view of yet another embodiment of a flush cut bag **2001c** according to the enclosed claims is shown. Bag **2001c** also has a front wall **2010,** a back wall **2011,** a first side wall **2012,** a second side wall **2013,** a top end **2014,** and a bottom end **2015.** Bag **2001c** also comprises an easy open feature **2020,** which in this embodiment is near the top end **2014** of the bag **2001c** and comprises a full cut **2021** in a semi-circular shape having a first end **2021a** and a second end **2021b** through the front wall **2010** of bag **2001c,** a first row of perforations **2022** extending from the first end **2021a** of the cut **2021,** a second row of perforations **2023** extending from the second end **2021b** of the cut **2021,** an optional third row of perforations **2024** connecting the end of the first row of perforations **2022** and the second row of perforations **2023,** tape **2025** covering the cut and the rows of perforations, and a pull tab **2026** attached to the tape **2025.**

Referring to FIG. 21, an alternate embodiment of tape **2025** and pull tab **2026** is shown, where tape **2025** covers the full cut **2021** in a semi-circular shape having a first end **2021a** and a second end **2021b,** but does not cover the full extent of the first row of perforations **2022** and the second row of perforations **2023,** and does not cover the third row of perforations **2024.** In this embodiment, the pull tab **2026** includes instructions to open the bag, but can also comprise black and white and/or color printing (not shown), for example a promotional coupon (not shown).

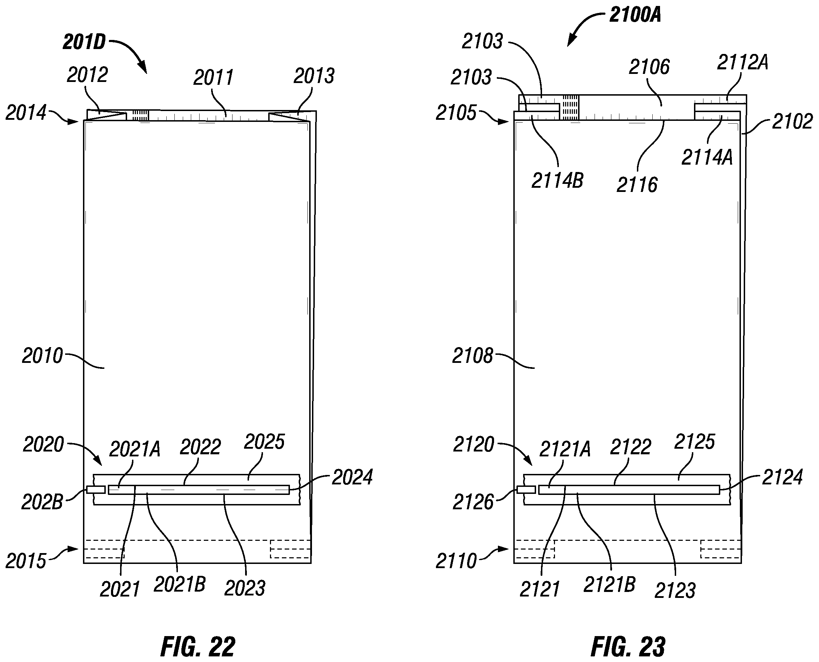

Referring to FIG. 22, the front side view of still another embodiment of a flush cut bag **2001d** according to the enclosed claims is shown. Bag **2001d** also has a front wall **2010,** a back wall **2011,** a first side wall **2012,** a second side wall **2013,** a top end **2014,** and a bottom end **2015.** Bag **2001d** also comprises an easy open feature **2020,** which in this embodiment is near the bottom end **2015** of the bag **2001d** and comprises a full cut **2021** in a rectangular shape having a first end **2021a** and a second end **2021b** through the front wall **2010** of bag **2001d,** a first row of perforations **2022** extending from the first end **2021a** of the cut **2021,** a second row of perforations **2023** extending from the second end **2021b** of the cut **2021,** an optional third row of perforations **2024** connecting the end of the first row of perforations **2022** and the second row of perforations **2023,** tape **2025** covering the cut and the rows of perforations, and a pull tab **2026** attached to the tape **2025.**

Referring to FIG. 23, the front side view of one embodiment of a "pinch cut" bag **2100a** according to the enclosed claims is shown. As shown in FIG. 23, the bag **2100a** has a first or top end **2105** and a second or bottom end **2110.** Once again, it will be apparent, however, that the orientation of the bag ends **2105** and **2110** is unimportant and the "top" and "bottom" references are useful but may change depending on the orientation one views the bag. Bag **2100a** is considered a "pinch cut" bag because one of the front wall **2108** or the back wall **2106** are cut so that one of the ends of the front wall **2108** or the back wall **2106** is longer than the other; they have different lengths. In the embodiment shown in FIG. 23 both of the ends of the bag **2100a** have a "pinch cut." The bag **2100a** has a front wall or surface **2108** with top end **2116,** a rear wall or surface **2106,** and two side walls **2102** and **2103.** Those skilled in the art will appreciate that conventional techniques can be used to provide side gussets in the bag **2100a** for each of sides **2102** and **2103** during this forming process. The first end **2105** of bag **2100a** has portions **2112a** and **2112b** of the rear wall or surface **2108** of the bag that extend further from the body of the bag **2100a** than do portions **2114a** and **2114b** of the material of bag **2100a** forming the side gussets for sides **2102** and **2103.** In addition, the portions **2114a** and **2114b** of the side gussets extend further from the body of the bag **2100a** than the top end **2116** of the front wall **2108** of the bag **2100a.** As shown in FIG. 23, the front wall **2108** of the bag **2100a** has an end portion **2116** at the first end **2105** of the bag that does not extend as far from the body of the bag **2100a** as the end portions **2114a** and **2114b** of the side gussets or the end portions **2112a** and **2112b** of the rear wall of the first end **2105** of the bag **2100a.** Bag **2100a** also comprises an easy open feature **2120** near the top end **2105** of the bag **2100a,** which in this embodiment comprises a full cut **2121** in a rectangular shape having a first end **2121a** and a second end **2121b** through the front wall **2108** of bag **2100a,** a first row of perforations **2122** extending from the first end **2121a** of the cut **2121,** a second row of perforations **2123** extending from the second end **2121b** of the cut **2121,** an optional third row of perforations **2124** connecting the end of the first row of perforations **2122** and the second row of perforations **2123,** tape **2125** covering the cut and the rows of perforations, and a pull tab **2126** attached to the tape **2125.**

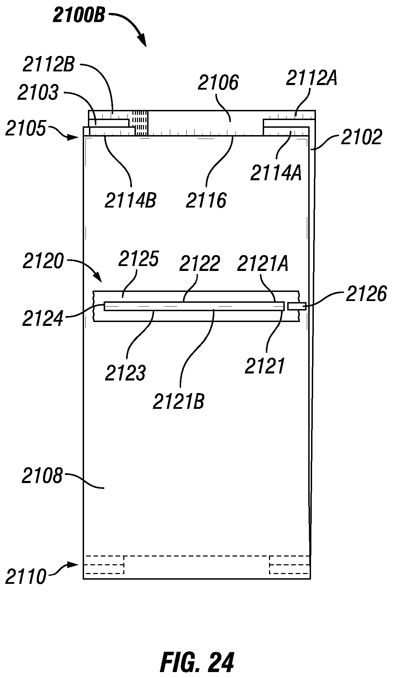

Referring to FIG. 24, the front side view of another embodiment of a pinch cut bag **2100b** according to the enclosed claims is shown. As shown in FIG. 24, the bag **2100b** has a first or top end **2105** and a second or bottom end **2110.** The bag **2100b** has a front wall or surface **2108** with top end **2116,** a rear wall or surface **2106,** and two side walls **2102** and **2103.** The first end **2105** of bag **2100b** has portions **2112a** and **2112b** of the rear wall or surface **2108** of the bag that extend further from the body of the bag **2100b** than do portions **2114a** and **2114b** of the material of bag **2100** forming the side gussets for sides **2102** and **2103.** In addition, the portions **2114a** and **2114b** of the side gussets extend further from the body of the bag **2100b** than the top end **2116** of the front wall **2108** of the bag **2100b.** As shown in FIG. 24, the front wall **2108** of the bag **2100b** has an end portion **2116** at the first end **2105** of the bag that does not extend as far from the body of the bag **2100b** as the end portions **2114a** and **2114b** of the side gussets or the end portions **2112a** and **2112b** of the rear wall of the first end **2105** of the bag **2100b.** Bag **2100b** also comprises an easy open feature **2120,** which in this embodiment is near the bottom end **2110** of the bag **2100b** and comprises a full cut **2121** in a rectangular shape having a first end **2121a** and a second end **2121b** through the front wall **2108** of bag **2100b,** a first row of perforations **2122** extending from the first end **2121a** of the cut **2121,** a second row of perforations **2123** extending from the second end **2121b** of the cut **2121,** an optional third row of perforations **2124** connecting the end of the first row of perforations **2122** and the second row of perforations **2123,** tape **2125** covering the cut and the rows of perforations, and a pull tab **2126** attached to the tape **2125.**

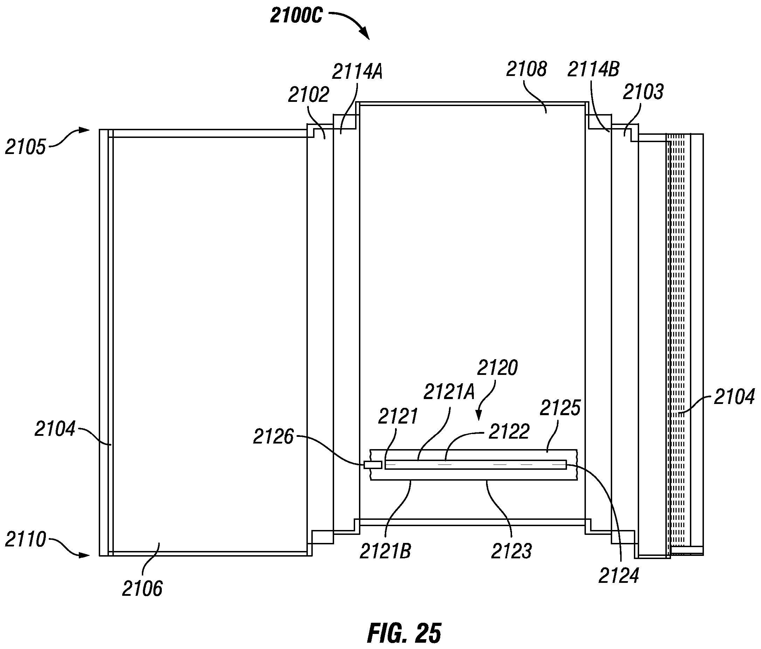

Referring to FIG. 25, a planar view of an embodiment of a substantially flat sheet of material from which a bag **2100c** according to the enclosed claims is to be formed is shown. Shown on the sheet are front wall **2108,** rear wall **2106,** first side **2102** having gusset portion **2114a,** second side **2103** having gusset portion **2114b,** seam **2104,** top end **2105** and bottom end **2110.** Also shown is easy open feature **2120,** which in this embodiment is near the bottom end **2110** of the front wall **2108** of the bag **2100c** and comprises a full cut **2121** in a rectangular shape having a first end **2121a** and a second end **2121b** through the front wall **2108** of bag **2100c,** a first row of perforations **2122** extending from the first end **2121a** of the cut **2121** across the front wall **2108** of bag **2100a,** a second row of perforations **2123** extending from the second end **2121b** of the cut **2121** across the front wall **2108** of bag **2100c,** an optional third row of perforations **2124** connecting the end of the first row of perforations **2122** and the second row of perforations **2123,** tape **2125** covering the cut **2121** and the rows of perforations, and a pull tab **2126** attached to the tape **2125.**

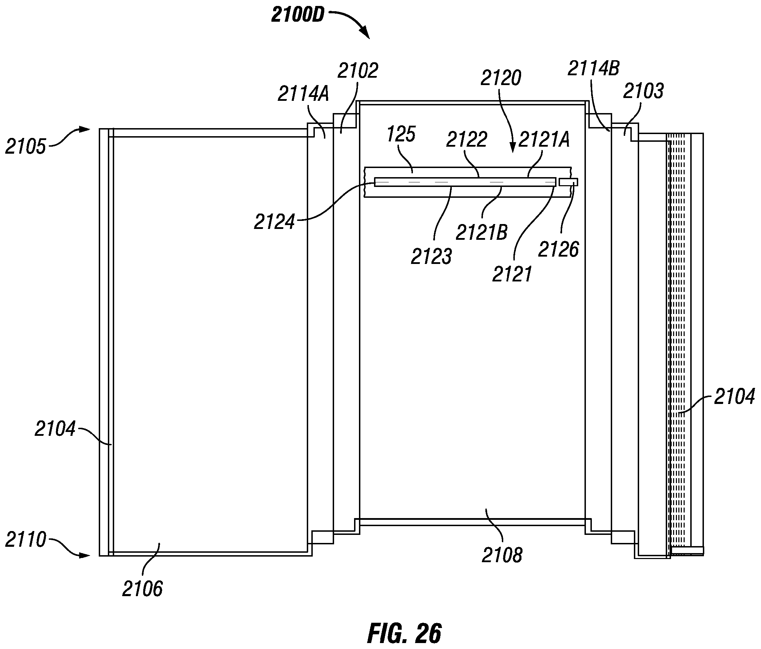

Referring to FIG. 26, a planar view of another embodiment of a substantially flat sheet of material from which a bag **2100d** according to the enclosed claims is to be formed is shown. Shown on the sheet are front wall **2108,** rear wall **2106,** first side **2102** having gusset portion **2114a,** second side **2103** having gusset portion **2114b,** seam **2104,** top end **2105** and bottom end **2110.** Also shown is easy open feature **2120,** which in this embodiment is near the top end **2105** of the front wall **2108** of the bag **2100d** and comprises a full cut **2121** in a rectangular shape having a first end **2121a** and a second end **2121b** through the front wall **2108** of bag **2100d,** a first row of perforations **2122** extending from the first end **2121a** of the cut **2121** across the front wall **2108** of bag **2100d,** a second row of perforations **2123** extending from the second end **2121b** of the cut across the front wall **2108** of bag **2100d,** an optional third row of perforations **2124** connecting the end of the first row of perforations **2122** and the second row of perforations **2123,** tape **2125** covering the cut **2121** and the rows of perforations, and a pull tab **2126** attached to the tape **2125.**

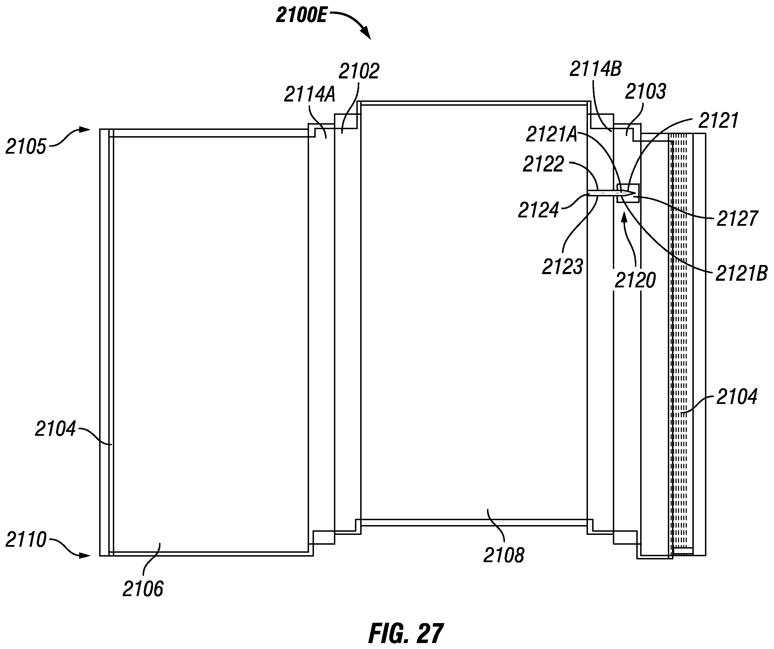

Referring to FIG. 27, a planar view of another embodiment of a substantially flat sheet of material from which a bag **2100e** according to the enclosed claims is to be formed is shown. Shown on the sheet are front wall **2108,** rear wall **2106,** first side **2102** having gusset portion **2114a,** second side **2103** having gusset portion **2114b,** seam **2104,** top end **2105** and bottom end **2110.** Also shown is easy open feature **2120,** which in this embodiment is near the top end **2105** of the second side **2103** of the bag **2100e** and comprises a full cut **2121** in a carat shape having a first end **2121a** and a second end **2121b** through the second side **2103** of bag **2100e,** a first row of perforations **2122** extending from the first end **2121a** of the cut **2121** across the second side **2103** of bag **2100e,** a second row of perforations **2123** extending from the second end **2121b** of the cut **2121** across the second side **2103** of bag **2100e,** an optional third row of perforations **2124** connecting the end of the first row of perforations **2122** and the second row of perforations **2123,** and a pull tape **2127** covering the cut **2121** and a small portion of the first row of perforations **2122** and second row of perforations **2123.**

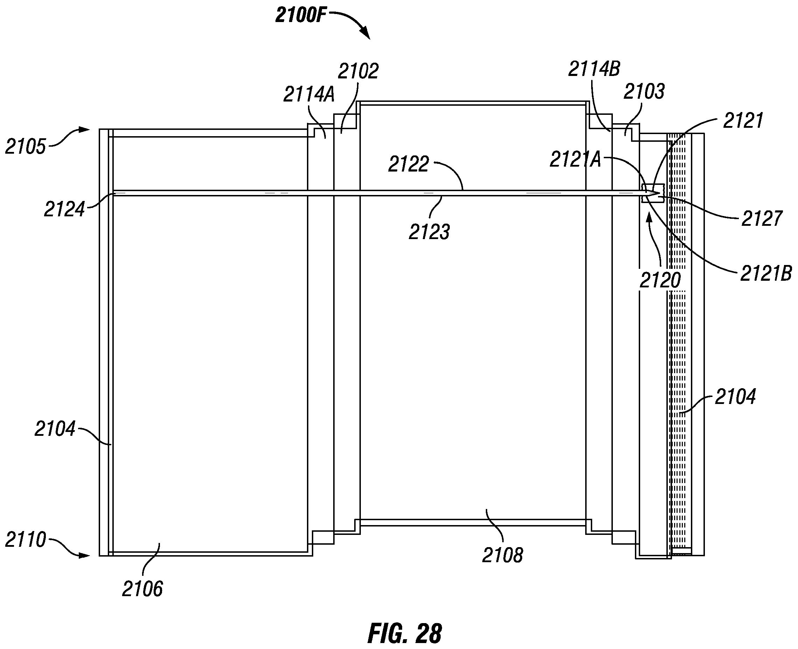

Referring to FIG. 28, a planar view of another embodiment of a substantially flat sheet of material from which a bag **2100f** according to the enclosed claims is to be formed is shown. Shown on the sheet are front wall **2108,** rear wall **2106,** first side **2102** having gusset portion **2114a,** second side **2103** having gusset portion **2114b,** seam **2104,** top end **2105** and bottom end **2110.** Also shown is easy open feature **2120,** which in this embodiment is near the top end **2105** of the second side **2103** of the bag **2100f** and comprises a full cut **2121** in a carat shape having a first end **2121a** and a second end **2121b** through the second side **2103** of bag **2100f,** a first row of perforations **2122** extending from the first end **2121a** of the cut **2121** across the second side **2103,** front wall **2108,** first side **2102** and rear wall **2104** of bag **2100f,** a second row of perforations **2123** extending from the second end **2121b** of the cut **2121** across the second side **2103,** front wall **2108,** first side **2102** and rear wall **2104** of bag **2100f,** an optional third row of perforations **2124** connecting the end of the first row of perforations **2122** and the second row of perforations **2123,** and a pull tape **2127** covering the cut **2121** and a small portion of the first row of perforations **2122** and second row of perforations **2123.**

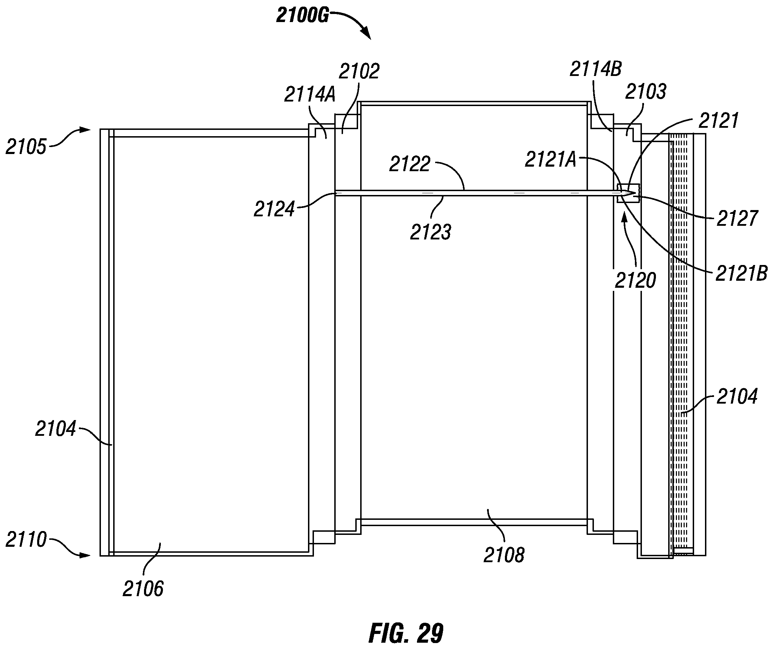

Referring to FIG. 29, a planar view of another embodiment of a substantially flat sheet of material from which a bag **2100g** according to the enclosed claims is to be formed is shown. Shown on the sheet are front wall **2108,** rear wall **2106,** first side **2102** having gusset portion **2114a,** second side **2103** having gusset portion **2114b,** seam **2104,** top end **2105** and bottom end **2110.** Also shown is easy open feature **2120,** which in this embodiment is near the top end **2105** of the second side **2103** of the bag **2100g** and comprises a full cut **2121** in a carat shape having a first end **2121a** and a second end **2121b** through the second side **2103** of bag **2100g,** a first row of perforations **2122** extending from the first end **2121a** of the cut **2121** across the second side **2103,** front wall **2108** and into the first side **2102** of bag **2100g,** a second row of perforations **2123** extending from the second end **2121b** of the cut **2121** across the second side **2103,** front wall **2108** and into the first side **2102** of bag **2100g,** an optional third row of perforations **2124** connecting the end of the first row of perforations **2122** and the second row of perforations **2123,** and a pull tape **2127** covering the cut **2121** and a small portion of the first row of perforations **2122** and second row of perforations **2123.**

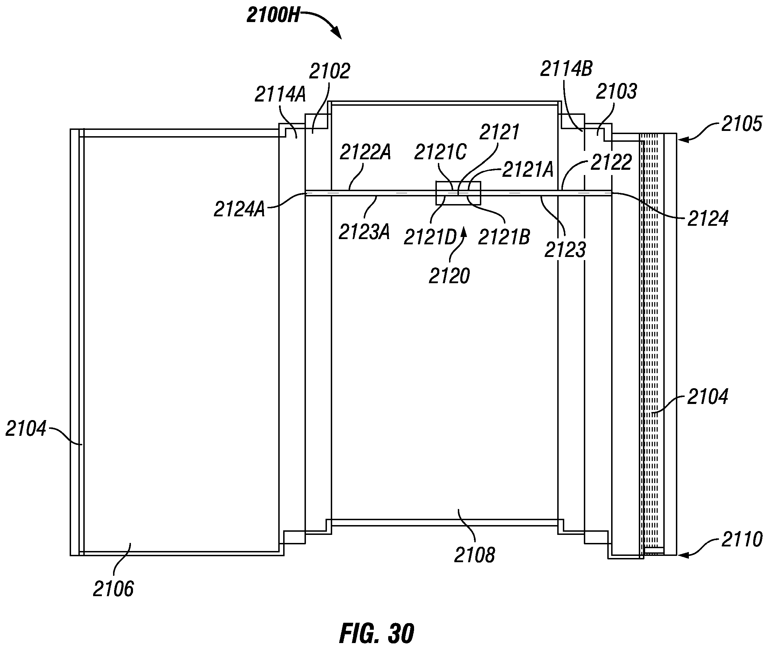

Referring to FIG. 30, a planar view of another embodiment of a substantially flat sheet of material from which a bag **2100h** according to the enclosed claims is to be formed is shown. Shown on the sheet are front wall **2108,** rear wall **2106,** first side **2102** having gusset portion **2114a,** second side **2103** having gusset portion **2114b,** seam **2104,** top end **2105** and bottom end **2110.** Also shown is easy open feature **2120,** which in this embodiment is near the top end **2105** of the front wall **2108** of the bag **2100h** and comprises a bidirectional full cut **2121** in a square shape having a first end **2121a,** a second end **2121b,** a third end **2121c** and a fourth end **2121d** through the front wall **2108** of bag **2100h,** a first row of perforations **2122** extending from the first end **2121a** of the cut **2121** across the front wall **2108** and into the first side **2102** of bag **2100h,** a second row of perforations **2123** extending from the second end **2121b** of the cut **2121** across the front wall **2108** and into the first side **2102** of bag **2100h,** an optional third row of perforations **2124** connecting the end of the first row of perforations **2122** and the second row of perforations **2123,** a fourth row of perforations **2122a** extending from the third end **2121c** of the cut **2121** across the front wall **2108** and into the second side **2103** of bag **2100h,** a fifth row of perforations **2123a** extending from the fourth end **2121d** of the cut **2121** across the front wall **2108** and into the second side **2103** of bag **2100h,** an optional sixth row of perforations **2124a** connecting the end of the fourth row of perforations **2122a** and the fifth row of perforations **2123a,** and a pull tape **2127** covering the cut **2121** and a small portion of the first row of perforations **2122,** second row of perforations **2123,** fourth row of perforations **2122a** and fifth row of perforations **2123a.**

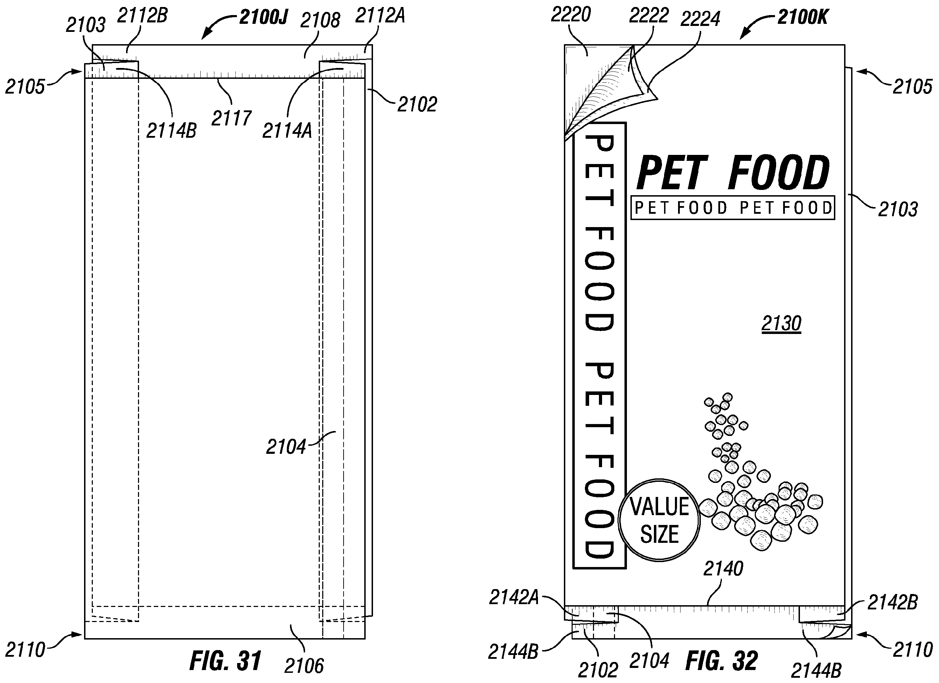

Referring to FIG. 31, the back side view of yet another embodiment of a pinch cut bag **2100j** according to the enclosed claims is shown. As shown in FIG. 31, the bag **2100j** has a first end **2105** and a second end **2110.** It is useful to think of first and second ends **2105** and **2110** as the top and bottom ends of the bag **2100j,** respectively. The bag **2100j** has a front wall or surface **1208,** a rear wall or surface **2106,** and two side walls **2102** and **2103.** The bag **2100j** also has a seam **2104** on the back side, or rear wall or surface. The seam **2104** is made when the bag **2100** is formed using conventional methods known to those skilled in the art. Using such conventional methods, a material from which a bag **2100j** is to be formed (such materials are discussed in detail below) is provided in a substantially flat sheet (see FIG. 25 through FIG. 30). The sheet is then directed and formed so that a portion of one side of the sheet is disposed on top of the other side of the sheet, such as in forming a tube. The overlapping portion is then secured and sealed together, forming the seam 2104. Those skilled in the art will appreciate that conventional techniques can be used to provide side gussets in the bag **2100j** for each of sides **2102** and **2103** during this forming process.

The bottom (as shown in FIG. 31) of the first end **2105** of bag **2100j** has portions **2112a** and **2112b** of the front wall **2108** or surface of the bag that extend further from the body of the bag **2100j** than do portions **2114a** and **2114b** of the material of bag **2100j** forming the side gussets for sides **2102** and **2103.** In addition, the portions **2114a and 2114b** of the side gussets extend further from the body of the bag **2100j** than the top end **2117** of the rear wall **2106** of the bag **2100j.** As shown in FIG. 31, the rear wall of the bag **2100j** has a top end **2117** that does not extend as far from the body of the bag **2100j** as the end portions **2114a** and **2114b** of the side gussets or the end portions **2112a** and **2112b** of the front wall **2108** of the bag **2100j.**

Now referring to FIG. 32, a top side view of bag **2100k** according to the enclosed claims is provided. For ease of reference, the same numerals are used in the Figures to denote the same features of bag **2100k.** As shown in FIG. 32, the bag **2100k** comprises multiple layers of materials **2220, 2222** and **2224.** The first layer **2220** is preferably a woven polymeric material, such as polypropylene, polyester, high-density polyethylene, or polyethylene. The woven plastic layer **2220** can be made of woven strips of plastic made of film to provide great strength from relatively lightweight materials. and can also be stretched to provide greater strength. For example, cross-laminated, woven plastic film strips, like XF films, are useful and are commercially available from Valeron. Similarly, a biaxially oriented polypropylene plastic material is commercially available from the AmTopp Division of Inteplast Group, Ltd. Those skilled in the art will appreciate that other materials, including various blends of polypropylene and polyethylene can be used without departing from the scope of the invention.

Still referring to FIG. 32, the layer **2222** is a coating or a lamination, preferably a polypropylene film. Layer **2224** is preferably an oriented polypropylene film with reverse printing. The layer **2224** can comprise reverse printing of various labels, advertising, warnings, and other information as may be desired, such as the cover **2130** shown in FIG. 32. Although not shown, those skilled in the art will appreciated that the top side, back side, and sides **2102** and **2103** of the bag **2100** may all contain such pictures, patterns, or information as may be desired. Those skilled in the art will appreciate that the reverse printing of layer **2224** can be achieved with conventional techniques, and with various conventional plastic films. An advantage of printing the bottom portion of the front and/or back panels is the provision of information that remains visible when the bag is on a display shelf in a store.

Still referring to FIG. 32, the bottom side (as shown in FIG. 32) of the bag **2100k** extends outward from the body of the bag **2100k** at the second end **2110** of the bag **2100k.** As shown in FIG. 32, the top side of the bag **2100k** has an end portion **2140** extending along the width of the bag **2100k.** The side gussets of the sides **2102** and **2103** of the bag **2100k** each have portions **2142a** and **2142b** which extend further towards the second end **2110** of the bag **2100k** than the end portion **2140** of the top side of bag **2100k.** In addition, the bottom side of the bag **2100k** has an end portion **2110** that extends further from the end portions **2142a** and **2142b** of the side gussets. The end portion **2110** of the bag **2100k** includes portions **2144a** and **2144b.** As shown in FIG. 32, the second end portion of the bottom side of the bag **2100k** extends along the entire width of the bag **2100k.** Also shown is seam **2104.**

Still referring to FIG. 32, the exposed end portions **2144a** and **2144b** of the bottom side of the bag **2100k** can be coated with a durable adhesive. The adhesive can be applied to selective surface areas, such as portions **2144a** and **2144b,** or can be applied in a line extending across the bottom side of the bag **2100k** along the second end portion **2110,** including portions **2144a** and **2144b.** After the adhesive is applied, preferably the sides **2102** and **2103** of the bag **2100,** together with the bottom side of the bag **2100k** are folded so that at least a portion of the interior surface of the bottom side of the bag **2100k** extends over the top surface of the top side of the bag **2100k.** Preferably, the portions **2142a** and **2142b** of the side gussets will be folded over and attached to the top surface of the top side of the bag **2100k,** as well as portions **2144a** and **2144b** of the second end **2110** of the bottom side of the bag **2100k.** The coating then seals the second end **2110** of the bag **2100k** together. The first end **2105** of the bag **2100k** can be sealed in a similar fashion if desired. Alternatively, the first end **2105** or second end **2110** of the bag **2100k** can be sealed using a hot melt technique or any other technique well-known to those skilled in the art.

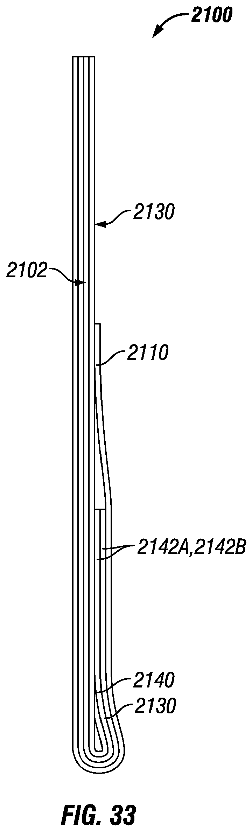

Referring now to FIG. 33, a detailed cross-sectional view of an end portion of the bag **2100** according to the enclosed claims is provided. As shown in FIG. 33, at least a portion of the front side **2130** of bag **2100** is now covered by the lowest edge portion **2110** of the back side of bag **2100,** the extending portions **2142a, 2142b** of side **2102** of the bag **2100,** as well as a portion of the front side **2130** of bag **2100** including end portion **2140.** Once these portions are folded over, heat and pressure can be applied as appropriate to obtain and ensure that the bottom end **2110** of bag **2100** is durably sealed, such as with a conventional heat sealable adhesive.

Once the bag **2100** is sealed at one end, it can be filled with the desired materials. It has been found that a bag **2100** with a height of 104 cm (41 inches) and a width of 71 cm (28 inches) can durably hold at least about 23 kg (fifty (50) pounds) of material without showing undue stress, tearing, breakage or the like. It is believed that any bulk material can be contained by bag **2100,** and the contents can weigh up to 45 kg (100 pounds) or so without undue risk of tearing or damage to bag **2100.** Once the bag **2100** is filled, the second end typically needs to be sealed. The second end of the bag **2100** can be sealed in a similar manner as that described above for the bottom end **2110.** Alternatively, the bag **2100** can have its second end sealed by conventional means such as sewing. Still another approach is to seal the second end in a manner like that described for the bottom end **2110** of the bag **2100,** and then stitching one of the two ends (not shown). Although not shown, those skilled in the art will understand and appreciate that a second end of bag **2100** can be sealed with conventional techniques once bag **2100** has been filled with the selected amount of the desired material.

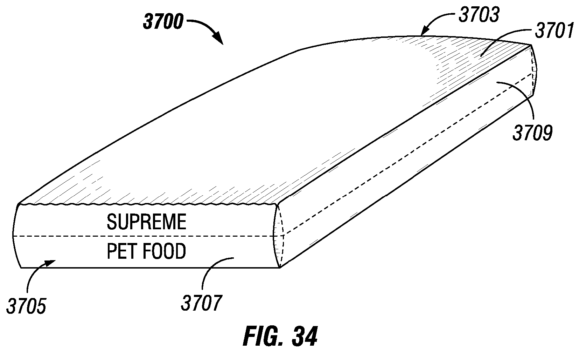

Referring now to FIG. 34, an isometric view of bag **2100b** is provided. As shown in FIG. 34, the bag **3700** includes a front panel **3701,** a first side panel with gussets **3709,** a second side panel with gussets (not visible in FIG. 34), a top end **3703,** and a bottom end **3705.** The bag **3700** is a pinch cut bag like those described previously, with both a pinch cut top end **3703** and a pinch cut bottom end **3705.** The bag **3700** preferably has a weakened area (not shown in FIG. 34) or other easy open feature on at least one surface (not shown in FIG. 34). As shown in FIG. 34, the bag **3700** has been filled and sealed and contains one or more materials. Although the contents of the bag **3700** may be food, animal food, other bulk items, the contents may also contain liquids or mixtures. Those skilled in the art will appreciate that the bag **3700,** once formed in accordance with the present disclosure, may be filled and then either the top end **3703** or the bottom end **3705** or both may be sealed as described previously. As shown in FIG. 34, the bag **3700,** once filled, presents a bottom panel **3707** on the bottom end **3705** thereof and a top panel on the top end thereof (not visible in FIG. 34). The bag **3700** may be stacked on top of similar or different bags, such as at a grocery store, pet store, or other display location, such that panel **3707** is easily visible to a consumer. As shown in FIG. 34 the front panel **3701,** the first side panel **3709** and the bottom panel **3707** includes printing (and can also include graphics), and it will be appreciated by the skilled artisan that the top panel, the rear panel, and the second side panel of bag **3700,** which are not visible in FIG. 34, can also include graphics and/or printing. Thus bag **3700** has six discrete areas for printing and/or graphics, each formed by a discrete surface area of the bag **3700.** Additionally, the printing and/or graphics can extend across more than one panel, or any combination of the six panels (not shown). The panel **3707** may include graphics and/or printing so that a consumer is able to quickly, readily and easily identify the brand of the contents in the bag, such as the brand name for the pet food therein if the bag **3700** contains pet food. Alternatively, or in addition, the printing or graphics on the panel **3707** may contain information such as price, composition, expiration date, and the like. In another embodiment, the panel **3707** may contain printing or graphics that provide a coupon or other price discount or other offer, either on the contents of the bag **3700** or some other product.

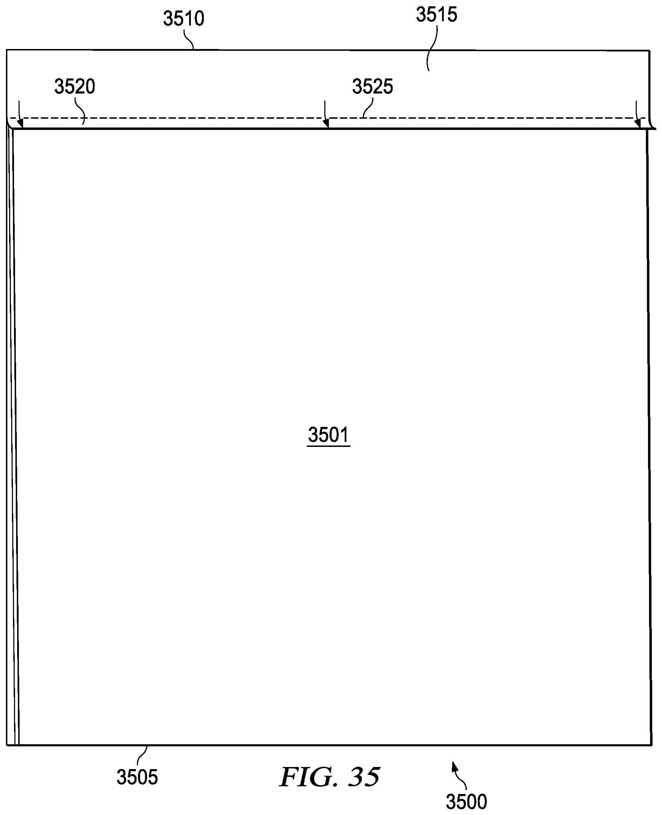

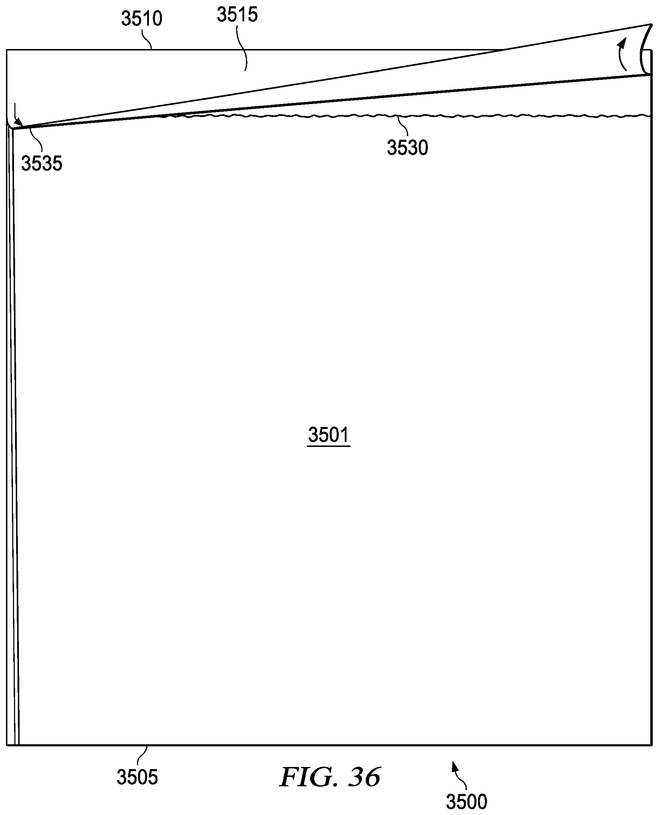

In one embodiment of the present disclosure, a bag according to the enclosed claims is provided that has a peelable, easy open feature. Such a bag is illustrated in Figs. 35 and 36. The bag has a front or first wall and an opposing back or second wall. The bag has side walls, and the side walls may have gussets, all as described above in connection with the various embodiments described. The bag is a laminated bag having two or more laminated layers. The bag has a top or first end, and a bottom or second end, with the first end of the back wall extending beyond the first end of the front wall. This extension of the top end of the back wall beyond the top end of the front wall may be anywhere from a fraction of a cm (an inch) to 10 cm (four inches), 15 cm (six inches), 20 cm (eight inches), 25 cm (ten inches), or more, as may be desired. Each of the bag walls has an exterior surface and an interior surface. The bag walls have a woven polymeric layer and one or more polymeric film layers, such as any of those described above in connection with the various bags described herein. The bag wall layers may comprise any one or more materials, including any type of polymer, polypropylene, polyethylene, high density or low density polyethylene, polyester, nylon, polyethylene terephthalate, polyester, polyamide, oriented polypropylene, biaxially-oriented polypropylene, oriented polyethylene, biaxially-oriented polyethylene, oriented polyester, biaxially-oriented polyester, nylon, oriented or biaxially-oriented nylon, oriented polyethylene terephthalate, biaxially-oriented polyethylene terephthalate, oriented polyamide, biaxially-oriented polyamide, coated paper, or any combination thereof.

A portion of the exterior surface of the front bag wall, the interior surface of the back bag wall, or both, are treated to provide a preferential peelable, easy open area as described in more detail below. The treated portion of the surface(s) of the front and/or back bag wall(s) is treated with a polyamide ink, a polyurethane-based ink, a nitrocellulose ink, or a combination of any of the foregoing, and may be treated in a preferred pattern, such as a rectangular area, elliptical area, triangular area, or the like. It should be appreciated that the interior of the back wall and/or the exterior of the front wall may be treated with two or more inks or a combination of one or more inks and one or more treatments. For example, a first portion of the overlay portion can be treated with a first type of ink or subject to a first treatment, and a second portion of the overlay portion can be treated with a second, different ink and/or subject to a second, different treatment. Depending on the material selected for one or more of the bag layers, one or more different inks or treatments may be selected to provide the desired sealing strength control at the desired locations of the bag. For example, we believe that a polyamide resin or polyamide-based ink will usually provide less sealing strength than a nitrocellulose- or polyurethane-based ink or resin.

The treated portion of the surface(s) of the front and/or back bag wall(s) is determined so that it is preferably proximal the top end of the front bag wall, such as within the top 3, 5 or 8 cm (one, two, or three inches) from the top end of the front bag wall when the back bag wall is folded over the top end of the bag and brought into contact with a portion of the exterior surface proximal the top end of the front bag wall. The treated portion may extend all or partially across the width of the front and/or back bag walls. For example, if it is desired to control the sealing strength so that the seal is stronger on the left hand side of the bag (as shown in Figs. 35 and 36) than the right hand side, more ink may be used on the right hand side of the bag wall and/or no ink may be used on the left hand side. Alternatively, the ink may be applied to an area that extends across 10%. 20%, 30%, 50%, or 100% of the bag's width from one side.

Once the front and/or back bag wall(s) have been treated, and a portion of the extending portion of the back bag wall has been folded over and brought into contact with a portion of the front bag wall proximal the top end of the bag, the overlaying portions of the front and back bag walls may be sealed, such as by applying heat and/or pressure in desired amounts for a desired time period, or by any of the sealing techniques described above in connection with any of the other embodiments described herein. This sealing may be done by passing the overlaying portions of the front and bag walls past a nozzle blowing heated air at or above a predetermined temperature or within a predetermined temperature range, or by applying heated clamps to opposing exterior surfaces of the overlaying portion of the front and bag walls, with the clamps applying a predetermined amount of pressure and at a predetermined temperature or above or within a predetermined temperature range. It will be appreciated that the front and back bag walls may be sealed without the use of an adhesive, or, as described above, one or more adhesives may be used to seal the bag end.

In addition, the sealing of the overlaying portions of the front and back bag walls may be done selectively, such that a portion of the back bag wall is not sealed to the front bag wall and forms a flap. The flap may extend along the width of the bag wall, or may extend for only a portion of the width of the bag wall. The flap and sealing of the front and back bag walls as described provides an easy open feature such that a consumer can grip the flap, such as at one side of the bag, and pull the flap upwards and/or away from the front wall of the bag. Because the strength of the seal has been controlled at the overlay portion of the front and back bag walls as desired, the consumer should be able to open the bag without the need for a knife or for scissors. The flap may include one or more pull tabs to assist the consumer in gripping and pulling the flap, and may include printing and/or graphics to instruct and assist the consumer in how to open the bag.

Referring now to Figs. 35 and 36, an example of one type of bag with a peelable, easy open feature of this type is illustrated. In Fig. 35, a bag **3500** with a peelable, easy open feature is shown. The bag **3500** has a front wall **3501** and an opposing back wall (not shown), which are joined by side walls. The bag **3500** further has a top end **3510** and a bottom end **3505.** The bottom end **3505** can be of any type, including a stepped-cut bag, a pinch bag, a pouch bag, or other type, and can be sealed using any of the sealing techniques described herein, or may include a peelable, easy open feature or other type of easy open feature. As illustrated in Fig. 35, a portion **3515** of the back wall is folded over and forms the top end **3510** of the bag **3500.** At least a portion of the portion **3515** located above the line **3525** is sealed to the front wall **3501** of the bag **3500.** In this particular illustration, the interior surface of the portion **3515** of the back wall is sealed to the exterior surface of the front bag wall. It will be understood that the extending portion of the back wall can be double-folded if desired so that an exterior surface of the back bag wall is sealed to the exterior surface of the front wall. It can be seen that a flap **3520** of the end of the back bag wall is not sealed to the front bag wall below the line **3525.** This flap **3520** can be gripped by a consumer and pulled to open the bag **3500** easily.

Referring now to Fig. 36, the exemplary bag **3500** is shown with a portion of the top end **3510** opened on the right hand side of the bag. The top end **3530** of the front wall **3501** of the bag **3500** is shown. It can be seen in Fig. 36 that the left-handed portion **3535** of the top end of the back wall is still sealed to the exterior surface of the front wall **3501.** It should be appreciated that a consumer can grip the flap **3520** (as shown in Fig. 35) at the right-hand side of the bag and pull upwards and/or away from the bag front wall 3501 to open the bag **3500.** It should also be appreciated that the selective treatment of a portion or portions of the front and/or back bag walls as described herein allow for a controlled sealing area proximal the top end of the bag **3500,** such as to create one or more areas in which the front and back bag walls are sealed with a stronger seal than other areas, and/or one or more areas in which the front and back bag walls are sealed with a seal which is more easily separated, all without the use of an adhesive (although, as noted, an adhesive may be used to seal the top end of the bag 3500 if desired). By selectively controlling the area(s) treated with one or more inks, and by controlling the heat, pressure, and/or duration of the application of heat and pressure to selected areas of the overlaying portions of the front and back bag walls, we have found that we can selectively and more precisely control the location of the seal between the front and back bag walls as well as the local strength of such seals, which can be varied, but in any event provides a strong seal which can pass the applicable drop test, peel test, and the like and provide a strong, durable seal.

In one particular example of a bag which is from 5.1 to 51 cm (2.0 to 20.0 inches) in width with a peelable, easy open feature like that shown and described herein, the bag walls comprise or consist of two or more layers, including a first layer comprising woven strips of oriented polyethylene, or polypropylene and a second layer comprising a film layer comprising oriented polyethylene, or polypropylene. The second layer is laminated to the first layer, such as without an adhesive, and may be laminated to the first layer by a third layer comprising a film layer comprising polyethylene, polyester, or polypropylene. The first, second and third layers may all comprise the same material, and may be polyethylene, polypropylene, or a combination thereof. The top end of the back wall may extend 0.64 cm to 15 cm (0.25 to 6.0 inches) or so beyond the top end of the front bag wall. A polyamide ink, urethane ink, nitrocellulose ink, or combination thereof, may be applied to the exterior or interior surface of the front bag wall in an area extending across the width of the front bag wall and from the top end of the front wall to 0.64 cm to 15 cm (0.25 to 6.0 inches) below the top end of the bag wall. The top end of the back wall may be folded over the top end of the front wall and a portion of the interior surface of the back wall may be placed into contact with a portion of the exterior surface of the front wall to form an overlaying portion of the front and back walls. The overlaying portion may extend lengthwise across the width of the bag wall and may be from 5 to 51 cm (2.0 to 20.0 inches) in width. The overlaying portion may be sealed by passing it by a nozzle blowing heated air at a temperature of from 182 °C to 982 °C (360 F. to 1800 F.) or so, at a speed of about 51 to 7620 cm (20 to 3,000 inches) per minute, to form a seal at the top end of the bag. In addition, an unsealed flap of about 0.318 cm to 5.1 cm (0.125 to 2.0 inches) or so in width may extend lengthwise across the width of the bag, wherein the flap is formed from the portion of the top end of the back wall that is not sealed to the front wall of the bag. We have found that such a bag is adapted to hold anywhere from 0.68 kg (1.5 pounds), 4.5 kg (ten pounds), 9.1 kg (twenty pounds), 13.6 kg (thirty pounds), 18.1 kg (forty pounds), 22.7 kg (fifty pounds), 27.2 kg (sixty pounds), to 31.8 kg (seventy pounds) of a filling material once filled, and provides a strong, durable seal that is rugged and can hold such contents without the risk of spilling or contamination, yet can be easily opened by a consumer without a knife or scissors by pulling the tab upwards and/or outwardly from the front wall of the bag. In this particular example, the bag's second layer may comprise printing and/or graphics on at least one side, which may be done with reverse printing or surface printing, and the ink coating may be applied to the second bag layer (e.g., the film layer) on the second layer's printed side. The ink coating may be applied to the film layer after the film layer has had the printing and/or graphics printed thereon.

Those skilled in the art will understand and appreciate that the bag according to the invention may vary in size, dimensions, and shape without departing from the scope of the invention, and that the foregoing description of the preferred embodiments is not intended to limit the scope of the invention as defined by the claims. For example, those skilled in the art will understand and appreciate that the disclosed bags can have sealed and sewn ends in a tubular bag with side gussets as shown, or a block bottom and top, or a combination thereof, although not shown. Those skilled in the art will also appreciate that a weakened portion or area can be provided in a number of ways that may vary from those expressly described and shown, such as by stressing portions of the bag wall with or without deforming, perforating, or cutting same, as well as varying the size, number, depth, and/or pattern of perforations, cuts, and/or deformations in a bag wall. Similarly, those skilled in the art will understand that the bags may be provided with a re-usable opening (not shown) or a corner portion adapted to allow a person to easily pour out the contents of the bag (not shown), or a combination of those features. Such features are known in certain types of prior art bags. Similarly, those skilled in the art will appreciate that terms such as "front" and "rear," "right" and "left", and "top" and "bottom," are useful in describing a bag, but essentially depend on a bag's orientation when such terms are used, and are therefore not limiting as to a bag's orientation.

## Claims

1. A bag (3500) comprising:
a front wall (3501), a back wall, a first side wall, and a second side wall wherein the first and second side walls are disposed on opposite sides of the front (3501) and back walls and connecting the front wall (3501) to the back wall, forming a bag with a first end (3510) and a second end (3505);
wherein each of the front wall (3501), back wall, first side wall and second side wall comprise at least two laminated layers comprising (i) a first layer comprising woven oriented polypropylene or polyethylene strips, and (ii) a second layer comprising an oriented polypropylene or polyethylene film;
wherein a portion (3515) of the front wall (3501) is folded or rolled over the first end (3510) of the bag (3500) and sealed to a portion of an exterior surface of the back wall, or a portion of the back wall is folded or rolled over an end of the bag (3500) and sealed to a portion of an exterior surface of the front wall (3501), to form a sealed closure of the bag (3500), wherein the sealed closure comprises a peel strength, wherein at least a portion of a surface of the front wall (3501) or the back wall is adapted to be separable from the sealed closure with a lower peel strength than the remaining portion of said sealed closure, wherein the difference in peel strength is due to a difference in treatment of one or more surfaces of the bag (3500), and wherein the difference in treatment comprises a difference in ionization of a portion of the one or more surfaces, wherein the portion of the one or more surfaces comprises a treatment of one or more of a polyurethane ink, a polyamide ink, a nitrocellulose ink, or a mixture of any thereof.

2. The bag (3500) of claim 1, wherein the at least a portion of a surface of the front wall (3501) or the back wall which is adapted to be separable from the sealed closure with a lower peel strength than the remaining portion of the sealed closure exhibits a lower peel strength when pulled in a first direction than when pulled in a second direction.

3. The bag (3500) of claim 2, wherein the peel strength is higher when pulled perpendicular to the surface of the bag (3500) as compared to the peel strength when pulled in a non-perpendicular direction.

4. The bag (3500) of claim 1 wherein the first end (3510) is sealed without an adhesive.

5. The bag (3500) of claim 1 wherein the bag (3500) comprises an easy open feature (3520) in the front (3501) or back wall of the bag (3500) and wherein the easy open feature (3520) is covered by the sealed closure, wherein the easy open feature (3520) optionally comprises a weakened area (836), wherein the weakened area optionally comprises one or more lines of cuts or perforations through or partially through the first layer , the second layer, or both the first layer and second layer of the front (3501) or back wall of the bag (3500), such as wherein the weakened area optionally comprises a line of perforations parallel to the top (3510) or bottom (3505) edge of the front (3501) or back wall of the bag (3500) and spaced apart from the bottom (3505) or top (3510) edge of the bag (3500) when the bag ends (3510, 3505) are sealed, at a distance of from about 10% to about 30% of the distance from the top edge (3510) to the bottom edge (3505), or at a distance of from about 10% to about 30% of the distance from the bottom edge (3505) to the top edge (3510) of the front (3501) or rear wall of the bag (3500), and extending horizontally over about 60% to about 90% of the width of the front wall (3501) or the back wall of the bag (3500), or wherein the weakened area optionally comprises a line of perforations or cuts and wherein a portion of the perforations or cuts defines a thumb tab.

6. The bag (3500) of claim 1, wherein the sealed closure exhibits less than a 3% failure rate when the bag (3500) is subjected to a drop test in accordance with ASTM D5276 including hanging a filled bag at 63°C (145°F) for 72 hours followed by a 6 point drop test from a height of at least 1.2m (4 feet), followed by storage at -33°C (-27°F) for 24 hours followed by another 6 point drop test from a height of at least 1.2m (4 feet), or wherein the sealed closure exhibits less than a 3% failure rate when the bag is subjected to a drop test in accordance with ASTM D5276 including hanging a filled bag at 63°C (145°F) for 144 hours followed by a 10 point drop test from a height of at least 1.2m (4 feet) followed by storage at -33°C (-27°F) for 72 hours followed by another 10 point drop test from at height of at least 1.2m (4 feet).

7. The bag (3500) of claim 1, wherein the first layer (2220) further comprises polypropylene, high density polyethylene, low density polyethylene, polyester, or any combination thereof, or wherein the second layer further comprises polypropylene, polyethylene, polyethylene terephthalate, polyamide, or any combination thereof or paper, or wherein the second layer further comprises oriented polypropylene, biaxially-oriented polypropylene, oriented polyethylene, biaxially-oriented polyethylene, oriented polyethylene terephthalate, biaxially-oriented polyethylene terephthalate, oriented polyamide, biaxially-oriented polyamide, coated paper or any combination thereof.

8. The bag (3500) of claim 1, wherein the bag walls (3501) further comprise a third layer and the third layer further comprises high density polyethylene, low density polyethylene, polyester, or any combination thereof, such as wherein the third layer further comprises polyethylene, polyethylene terephthalate, polyamide, or any combination thereof.

9. A method of making a bag (3500), comprising the steps of:
providing a bag (3500) having a first bag wall (3501), a second bag wall, a first side wall and a second side wall, with the first (3501) and second bag walls opposing each other, and wherein each bag wall comprises at least a first polymeric layer and a second layer, with the bag (3500) defining a first end (3510) and a second end (3505), wherein the first bag wall (3501) extends beyond the second bag wall and each of the bag walls have an interior surface and an exterior surface;
adding an ink treatment to a portion of an interior surface of the first bag wall (3501) proximal the first end (3510) of the bag (3500), an exterior surface of the second bag wall proximal the first end (3510) of the bag (3500), or both;
adding an ionization treatment to the portion of the interior surface of the first bag wall (3501) proximal the first end (3510) of the bag (3500) comprising the ink treatment, the exterior surface of the second bag wall proximal the first end (3510) of the bag (3500) comprising the ink treatment, or both;
folding the portion of the first bag wall (3501) extending beyond the end of the second bag wall over the end of the second bag wall and contacting a portion of the interior surface of the first bag wall (3501) proximal the end of the first bag wall (3501) with a portion of the exterior surface of the second bag wall proximal the end of the second bag wall, thereby creating an overlay portion of the first (3501) and second bag walls;
applying heat and/or pressure to a first portion of the overlay portion of the first (3501) and second bag walls to form a seal between the first portion of the overlay portion of the first (3501) and second bag walls.

10. The method according to claim 9, wherein the ink treatment comprises a polyamide ink, a nitrocellulose ink, a urethane-based ink, or a combination of any or all of the foregoing, or wherein the overlay portion comprises a portion of the bag wall approximately 0.64cm to 5.1cm (¼ inch to 2 inches) from the first end (9) of the bag.

11. The method according to claim 9, wherein a second portion of the first bag wall (3501) extends beyond the overlay portion and is not sealed to the second bag wall.

12. The method according to claim 9, wherein the step of applying heat and/or pressure comprises directing heated gas at the overlay portion.

13. The method according to claim 12, wherein the heated gas comprises air at or above a predetermined temperature.

14. The method according to claim 9, wherein the step of applying heat and/or pressure comprises moving the overlay portion of the bag (3500) at a predetermined speed past a nozzle blowing heated air within a predetermined temperature range on the overlay portion.

## Patentansprüche

1. Beutel (3500), umfassend:
- eine Vorderwand (3501), eine Rückwand, eine erste Seitenwand und eine zweite Seitenwand, wobei die erste und die zweite Seitenwand an gegenüberliegenden Seiten der Vorderwand (3501) und der Rückwand angeordnet sind und die Vorderwand (3501) mit der Rückwand verbinden, wodurch ein Beutel mit einem ersten Ende (3510) und einem zweiten Ende (3505) gebildet wird,
- wobei die Vorderwand (3501), die Rückwand, die erste Seitenwand und die zweite Seitenwand jeweils mindestens zwei laminierte Schichten mit (i) einer ersten Schicht aus gewebten, orientierten Polypropylen- oder Polyethylenstreifen und (ii) einer zweiten Schicht mit einer orientierten Polypropylen- oder Polyethylenfolie umfassen,
- wobei ein Abschnitt (3515) der Vorderwand (3501) über das erste Ende (3510) des Beutels (3500) gefaltet oder gerollt und mit einem Abschnitt einer Außenfläche der Rückwand versiegelt ist, oder ein Abschnitt der Rückwand über ein Ende des Beutels (3500) gefaltet oder gerollt und mit einem Abschnitt einer Außenfläche der Vorderwand (3501) versiegelt ist, um einen versiegelten Verschluss des Beutels (3500) zu bilden, wobei der versiegelte Verschluss eine Schälfestigkeit aufweist, wobei mindestens ein Teil der Oberfläche der Vorderwand (3501) oder der Rückwand so ausgelegt ist, dass er mit einer geringeren Schälfestigkeit als der verbleibende Teil des versiegelten Verschlusses von diesem abziehbar ist, wobei der Unterschied in der Schälfestigkeit auf einen Unterschied in der Behandlung einer oder mehrerer Oberflächen des Beutels (3500) zurückzuführen ist, und wobei der Unterschied in der Behandlung einen Unterschied in der Ionisation eines Teils der einen oder mehreren Oberflächen umfasst, wobei der Teil der einen oder mehreren Oberflächen eine Behandlung mit einer oder mehreren der folgenden Farben umfasst: einer Polyurethanfarbe, einer Polyamidfarbe, einer Nitrocellulosefarbe oder einer Mischung aus diesen.

2. Beutel (3500) nach Anspruch 1, wobei mindestens ein Teil einer Oberfläche der Vorderwand (3501) oder der Rückwand, der so ausgelegt ist, dass er mit einer geringeren Schälfestigkeit als der verbleibende Teil des versiegelten Verschlusses von diesem abziehbar ist, eine geringere Schälfestigkeit aufweist, wenn er in einer ersten Richtung gezogen wird, als wenn er in einer zweiten Richtung gezogen wird.

3. Beutel (3500) nach Anspruch 2, wobei die Schälfestigkeit höher ist, wenn senkrecht zur Oberfläche des Beutels (3500) gezogen wird, als wenn in einer nicht senkrechten Richtung gezogen wird.

4. Beutel (3500) nach Anspruch 1, wobei das erste Ende (3510) ohne einen Klebstoff versiegelt ist.

5. Beutel (3500) nach Anspruch 1, wobei der Beutel (3500) eine Einrichtung (3520) zum leichten Öffnen in der Vorderwand (3501) oder Rückwand des Beutels (3500) umfasst und wobei die Einrichtung (3520) zum leichten Öffnen durch den versiegelten Verschluss abgedeckt ist, wobei die Einrichtung (3520) zum leichten Öffnen (3520) optional einen geschwächten Bereich (836) umfasst, wobei der geschwächte Bereich optional eine oder mehrere Linien von Schnitten oder Perforationen durch oder teilweise durch die erste Schicht, die zweite Schicht oder sowohl die erste Schicht als auch die zweite Schicht der Vorderwand (3501) oder Rückwand des Beutels (3500) umfasst,
- wobei beispielsweise der geschwächte Bereich optional eine Linie von Perforationen parallel zur oberen (3510) oder unteren (3505) Kante der Vorderwand (3501) oder der Rückwand des Beutels (3500) und von der unteren (3505) oder oberen (3510) Kante des Beutels (3500) beabstandet umfasst, und zwar wenn die Beutelenden (3510, 3505) versiegelt sind, in einem Abstand von etwa 10 % bis etwa 30 % des Abstands von der Oberkante (3510) zur Unterkante (3505) oder in einem Abstand von etwa 10 % bis etwa 30 % des Abstands von der Unterkante (3505) zur Oberkante (3510) der Vorderwand (3501) oder der Rückwand des Beutels (3500), und die sich horizontal über etwa 60 % bis etwa 90 % der Breite der Vorderwand (3501) oder der Rückwand des Beutels (3500) erstrecken, oder wobei der geschwächte Bereich optional eine Reihe von Perforationen oder Schnitten umfasst und wobei ein Teil der Perforationen oder Schnitte eine Daumenlasche begrenzt.

6. Beutel (3500) nach Anspruch 1, wobei der versiegelte Verschluss eine Ausfallrate von weniger als 3 % aufweist, wenn der Beutel (3500) einem Falltest gemäß ASTM D5276 unterzogen wird, wobei ein gefüllter Beutels 72 Stunden bei 63 °C (145 °F) aufgehängt wird, gefolgt von einem 6-Punkt-Falltest aus einer Höhe von mindestens 1,2 m (4 Fuß), gefolgt von einer Lagerung bei -33 °C (-27 °F) für 24 Stunden, gefolgt von einem weiteren 6-Punkt-Falltest aus einer Höhe von mindestens 1,2 m (4 Fuß), oder wobei der versiegelte Verschluss eine Ausfallrate von weniger als 3 % aufweist, wenn der Beutel einem Falltest gemäß ASTM D5276 unterzogen wird, bei dem ein gefüllter Beutel 144 Stunden bei 63 °C (145 °F) aufgehängt wird, gefolgt von einem 10-Punkt-Falltest aus einer Höhe von mindestens 1,2 m (4 Fuß), gefolgt von 72 Stunden Lagerung bei -33 °C (-27 °F), gefolgt von einem weiteren 10-Punkt-Falltest aus einer Höhe von mindestens 1,2 m (4 Fuß).

7. Beutel (3500) nach Anspruch 1, wobei die erste Schicht (2220) ferner Polypropylen, Polyethylen hoher Dichte, Polyethylen niedriger Dichte, Polyester oder eine beliebige Kombination aus diesen umfasst, oder wobei die zweite Schicht ferner Polypropylen, Polyethylen, Polyethylenterephthalat, Polyamid oder eine beliebige Kombination aus diesen oder Papier umfasst, oder wobei die zweite Schicht ferner orientiertes Polypropylen, biaxial orientiertes Polypropylen, orientiertes Polyethylen, biaxial orientiertes Polyethylen, orientiertes Polyethylenterephthalat, biaxial orientiertes Polyethylenterephthalat, orientiertes Polyamid, biaxial orientiertes Polyamid, beschichtetes Papier oder eine beliebige Kombination aus diesen umfasst.

8. Beutel (3500) nach Anspruch 1, wobei die Beutelwände (3501) ferner eine dritte Schicht umfassen und die dritte Schicht ferner Polyethylen hoher Dichte, Polyethylen niedriger Dichte, Polyester oder eine beliebige Kombination davon umfasst, wie etwa wobei die dritte Schicht ferner Polyethylen, Polyethylenterephthalat, Polyamid oder eine beliebige Kombination davon umfasst.

9. Verfahren zur Herstellung eines Beutels (3500), umfassend die Schritte:
- Bereitstellen eines Beutels (3500) mit einer ersten Beutelwand (3501), einer zweiten Beutelwand, einer ersten Seitenwand und einer zweiten Seitenwand, wobei die erste (3501) und die zweite Beutelwand einander gegenüberliegen und wobei jede Beutelwand mindestens eine erste Polymerschicht und eine zweite Schicht umfasst, wobei der Beutel (3500) ein erstes Ende (3510) und ein zweites Ende (3505) begrenzt, wobei sich die erste Beutelwand (3501) über die zweite Beutelwand hinaus erstreckt und jede der Beutelwände eine Innenfläche und eine Außenfläche aufweist,
- Hinzufügen einer Behandlung mit Tinte zu einem Abschnitt der Innenfläche der ersten Beutelwand (3501) in der Nähe des ersten Endes (3510) des Beutels (3500), der Außenfläche der zweiten Beutelwand in der Nähe des ersten Endes (3510) des Beutels (3500) oder beiden,
- Hinzufügen einer Ionisationsbehandlung zu dem Abschnitt der Innenfläche der ersten Beutelwand (3501) in der Nähe des ersten Endes (3510) des Beutels (3500), der die Tintenbehandlung umfasst, der Außenfläche der zweiten Beutelwand in der Nähe des ersten Endes (3510) des Beutels (3500), die die Tintenbehandlung umfasst, oder zu beiden,
- Falten des Abschnitts der ersten Beutelwand (3501), der sich über das Ende der zweiten Beutelwand hinaus erstreckt, über das Ende der zweiten Beutelwand und Inkontaktbringen eines Abschnitts der Innenfläche der ersten Beutelwand (3501) in der Nähe des Endes der ersten Beutelwand (3501) mit einem Abschnitt der Außenfläche der zweiten Beutelwand in der Nähe des Endes der zweiten Beutelwand, wodurch ein Überlappungsabschnitt der ersten (3501) und zweiten Beutelwand geschaffen wird,
- Anwenden von Wärme und/oder Druck auf einen ersten Abschnitt des Überlappungsabschnitts der ersten (3501) und zweiten Beutelwand, um eine Versiegelung zwischen dem ersten Abschnitt des Überlappungsabschnitts der ersten (3501) und der zweiten Beutelwand zu bilden.

10. Verfahren nach Anspruch 9, wobei die Tintenbehandlung eine Polyamidtinte, eine Nitrocellulosetinte, eine Tinte auf Urethanbasis oder eine Kombination aus einer oder allen der vorgenannten Tinten umfasst, oder wobei der Überlappungsabschnitt einen Abschnitt der Beutelwand umfasst, der etwa 0,64 cm bis 5,1 cm (1/4 Zoll bis 2 Zoll) vom ersten Ende (9) des Beutels entfernt ist.

11. Verfahren nach Anspruch 9, wobei sich ein zweiter Abschnitt der ersten Beutelwand (3501) über den Überlagerungsabschnitt hinaus erstreckt und nicht mit der zweiten Beutelwand versiegelt ist.

12. Verfahren nach Anspruch 9, wobei der Schritt des Anwendens von Wärme und/oder Druck das Richten von erhitztem Gas auf den Überlagerungsabschnitt umfasst.

13. Verfahren nach Anspruch 12, wobei das erhitzte Gas Luft mit einer vorbestimmten Temperatur oder darüber umfasst.

14. Verfahren nach Anspruch 9, wobei der Schritt des Anwendens von Wärme und/oder Druck das Bewegen des Überlagerungsabschnitts des Beutels (3500) mit einer vorbestimmten Geschwindigkeit an einer Düse vorbei umfasst, die innerhalb eines vorbestimmten Temperaturbereichs erhitzte Luft auf den Überlagerungsabschnitt bläst.

## Revendications

1. Un sac (3500) comprenant :
une paroi (3501) avant, une paroi arrière, une première paroi latérale et une deuxième paroi latérale, dans lequel les première et deuxième parois latérales sont disposées sur des côtés opposés des parois avant (3501) et arrière et relient la paroi (3501) avant à la paroi arrière, en formant un sac ayant une première extrémité (3510) et une deuxième extrémité (3505) ;
dans lequel chacune de la paroi (3501) avant, de la paroi arrière, de la première paroi latérale et de la deuxième paroi latérale comprend au moins deux couches stratifiées comprenant (i) une première couche comprenant des bandes tissées orientées de polypropylène ou de polyéthylène et (ii) une deuxième couche comprenant un film orienté de polypropylène ou de polyéthylène ;
dans lequel une partie (3515) de la paroi (3501) avant est pliée ou roulée sur la première extrémité (3510) du sac (3500) et scellée à une partie d'une surface extérieure de la paroi arrière, ou une partie de la paroi arrière est pliée ou roulée sur une extrémité du sac (3500) et scellée à une partie d'une surface extérieure de la paroi (3501) avant, pour former une fermeture scellée du sac (3500), dans lequel la fermeture scellée a une force de pelage, dans lequel au moins une partie d'une surface de la paroi (3501) avant ou de la paroi arrière est propre à pouvoir être séparée de la fermeture scellée par une force de pelage moindre que la partie restante de ladite fermeture scellée, dans lequel la différence de force de pelage est due à une différence de traitement d'une ou de plusieurs surfaces du sac (3500), et dans lequel la différence de traitement comprend une différence d'ionisation d'une partie d'une ou de plusieurs surfaces, dans lequel la partie de l'une ou des plusieurs surfaces comprend un traitement de la une ou des plusieurs d'une encre de polyuréthane, d'une encre de polyamide, d'une encre nitrocellulose ou de leurs mélanges.

2. Le sac (3500) de la revendication 1, dans lequel au moins une partie d'une surface de la paroi (3501) avant ou de la paroi arrière, qui est propre à pouvoir être séparée de la fermeture scellée par une force de pelage moindre que la partie restante de la fermeture scellée, présente une force de pelage plus petite lorsqu'on tire dans une première direction que lorsqu'on tire dans une deuxième direction.

3. Le sac (3500) de la revendication 2, dans lequel la force de pelage est plus grande lorsqu'on tire perpendiculairement à la surface du sac (3500) que la force de pelage lorsqu'on tire dans une direction non perpendiculaire.

4. Le sac (3500) de la revendication 1, dans lequel la première extrémité (3510) est scellée sans un adhésif.

5. Le sac (3500) de la revendication 1, dans lequel le sac (3500) comprend une caractéristique (3520) d'ouverture facile dans la paroi avant (3501) ou arrière du sac (3500) et dans lequel la caractéristique (3520) d'ouverture facile est recouverte par la fermeture scellée, dans lequel la caractéristique (3520) d'ouverture facile comprend éventuellement une zone (836) affaiblie, dans lequel la zone affaiblie comprend éventuellement une ou plusieurs lignes de découpes ou de performation dans ou partiellement dans la première couche, la deuxième couche ou à la fois dans la première couche et la deuxième couche de la paroi avant (3501) ou arrière du sac (3500), de manière à ce que, lorsque la zone affaiblie comprend une ligne de perforation parallèle au bord de sommet (3510) ou de fond (3505) de la paroi avant (3501) ou arrière du sac (3500) et à distance du bord du fond (3505) ou du sommet (3510) du sac (3500), lorsque les extrémités (3510, 3505) sont scellées, à une distance d'environ 10 % à environ 30 % de la distance du bord (3510) de sommet au bord (3505) de fond ou à une distance d'environ 10 % à environ 30 % de la distance du bord (3505) de fond au bord (3510) de sommet de la paroi avant (3501) ou arrière du sac (3500), et s'étendant horizontalement sur environ 60 % à environ 90 % de la largeur de la paroi (3501) avant ou de la paroi arrière du sac (3500), ou dans lequel la zone affaiblie comprend éventuellement une ligne de perforations ou de découpes et dans lequel une partie des perforations et des découpes définit une patte pour un pouce.

6. Le sac (3500) de la revendication 1, dans lequel la fermeture scellée présente un taux de défaillance plus petit que 3 % lorsque le sac (3500) est soumis à un test de chute suivant ASTM D5276 incluant suspendre un sac rempli à 63°C (145°F) pendant 72 heures suivi d'un test de chute de 6 points d'une hauteur d'au moins 1,2 m (4 pieds) suivi d'un stockage à -33°C (-27°F) pendant 24 heures, suivi d'un autre test de chute de 6 points d'une hauteur d'au moins 1,2 m (4 pieds), ou dans lequel la fermeture scellée présente un taux de défaillance plus petit que 3 % lorsque le sac est soumis à un test de chute suivant ASTM D5276 comprenant suspendre un sac rempli à 63°C (145°F) pendant 144 heures suivi d'un test de chute de 10 points d'une hauteur d'au moins 1,2 m (4 pieds) suivi d'un stockage à -33°C (- 27°F) pendant 72 heures suivi d'un autre test de chute de 10 points d'une hauteur d'au moins 1,2 m (4 pieds).

7. Le sac (3500) de la revendication 1, dans lequel la première couche (2220) comprend en outre du polypropylène, du polyéthylène de haute densité, du polyéthylène de basse densité, du polyester ou leurs combinaisons, ou dans lequel la deuxième couche comprend du polypropylène, du polyéthylène, du poly(téréphtalate d'éthylène), du polyamide, ou leurs combinaisons ou du papier, ou dans lequel la deuxième couche comprend en outre du polypropylène orienté, du polypropylène orienté biaxialement, du polyéthylène orienté, du polyéthylène orienté biaxialement, du poly(téréphtalate d'éthylène) orienté, du poly(téréphtalate d'éthylène) orienté biaxialement, du polyamide orienté, du polyamide orienté biaxialement, du papier couché ou leurs combinaisons.

8. Le sac (3500) de la revendication 1, dans lequel les parois (3501) du sac comprennent en outre une troisième couche et la troisième couche comprend en outre du polyéthylène de haute densité, du polyéthylène de basse densité, du polyester ou leurs combinaisons, de manière à ce que la troisième couche comprenne en outre du polyéthylène, du poly(téréphtalate d'éthylène), du polyamide ou leurs combinaisons.

9. Un procédé pour faire un sac (3500), comprenant les stades de :
se procurer un sac (3500) ayant une première paroi (3501) de sac, une deuxième paroi de sac, une première paroi latérale et une deuxième paroi latérale, la première (3501) paroi latérale et la deuxième paroi latérale étant opposées l'une à l'autre, et dans lequel chaque paroi du sac comprend au moins une première couche polymère et une deuxième couche, le sac (3500) définissant une première extrémité (3510) et une deuxième extrémité (3505) dans lequel la première paroi (3501) du sac s'étend au-delà de la deuxième paroi du sac et chacune des parois du sac a une surface intérieure et une surface extérieure ;
ajouter un traitement à l'encre à une partie d'une surface intérieure de la première paroi (3501) du sac proche de la première extrémité (3510) du sac (3500), à une surface extérieure de la deuxième paroi du sac, proche de la première extrémité (3510) du sac (3500), ou les deux ;
ajouter un traitement d'ionisation à la partie de la surface intérieure de la première paroi (3501) du sac, proche de la première extrémité (3510) du sac (3500) comprenant le traitement à l'encre, la surface extérieure de la deuxième paroi du sac, proche de la première extrémité (3510) du sac (3500), comprenant le traitement à l'encre, ou les deux ;
plier la partie de la première paroi (3501) du sac s'étendant au-delà de l'extrémité de la deuxième paroi du sac sur l'extrémité de la deuxième paroi du sac et mettre en contact une partie de la surface intérieure de la première partie (3501) du sac, proche de l'extrémité de la première paroi (3501) du sac, avec une partie de la surface extérieure de la deuxième paroi du sac, proche de l'extrémité de la deuxième paroi du sac en créant ainsi une partie superposée de la première (3501) et de la deuxième paroi de sac ;
appliquer de la chaleur et/ou de la pression à une première partie de la partie superposée de la première (3501) et deuxième paroi du sac pour former un joint entre la première partie de la partie en recouvrement de la première (3501) et deuxième paroi de sac.

10. Le procédé suivant la revendication 9, dans lequel le traitement à l'encre comprend une encre de polyamide, une encre de nitrocellulose, une encre à base d'uréthane ou leurs combinaisons ou dans lequel la partie en recouvrement comprend une partie de la paroi du sac allant d'environ 0,64 cm à 5,1 cm (¹4 de pouces à 2 pouces) à partir de la première extrémité (9) du sac.

11. Le procédé suivant la revendication 9, dans lequel une deuxième partie de la première paroi (3501) du sac s'étend au-delà de la partie en recouvrement et n'est pas scellée à la deuxième paroi du sac.

12. Le procédé suivant la revendication 9, dans lequel le stade d'application de la chaleur et/ou de la pression comprend diriger du gaz chauffé sur la partie en recouvrement.

13. Le procédé suivant la revendication 12, dans lequel le gaz chauffé comprend de l'air à ou au-dessus d'une température déterminée à l'avance.

14. Le procédé suivant la revendication 9, dans lequel le stade d'application de la chaleur et/ou de la pression comprend déplacer la partie en recouvrement du sac (3500) a une vitesse déterminée à l'avance devant une buse soufflant de l'air chauffé dans une plage de température déterminée à l'avance sur la partie en recouvrement.
